# EUROPEAN PATENT APPLICATION

(11) **EP 4 311 324 A1**
(43) Date of publication of application: **24.01.2024**
(21) Application number: 22770579.5
(22) Date of filing: 17.03.2022
(51) Int. Cl.: H04W 64/00

(54) **TIMING ERROR GROUP INDICATION METHOD AND APPARATUS, AND USER EQUIPMENT AND NETWORK SIDE DEVICE**

(30) Priority: 18.03.2021 CN 202110292507
(71) Applicant: Vivo Mobile Communication Co., Ltd., Dongguan, Guangdong 523863 (CN)
(72) Inventor: SI, Ye, Dongguan, Guangdong 523863 (CN); WANG, Yuanyuan, Dongguan, Guangdong 523863 (CN); WU, Huaming, Dongguan, Guangdong 523863 (CN); ZHUANG, Zixun, Dongguan, Guangdong 523863 (CN)
(74) Representative: Murgitroyd & Company
(86) International application number: PCT/CN2022/081293
(87) International publication number: WO 2022/194226

(57) **Abstract**

This application discloses a timing error group indication method and apparatus, a terminal, and a network side device, and pertains to the field of communication technologies. The timing error group indication method in this embodiment of this application includes: indicating, by a terminal, first information to a network side device, where the first information is used to assist the network side device in performing positioning calculation; and/or receiving, by the terminal, second information sent by the network side device, where the second information is used to assist the terminal and/or the network side device in performing positioning calculation.

## Description

### CROSS-REFERENCE TO RELATED APPLICATION

This application claims priority to Chinese Patent Application No. 2021102925079, filed on March 18, 2021 and entitled "TIMING ERROR GROUP INDICATION METHOD AND APPARATUS, TERMINAL, AND NETWORK SIDE DEVICE", which is incorporated herein by reference in its entirety.

### TECHNICAL FIELD

This application relates to the field of communication technologies, and specifically relates to a timing error group indication method and apparatus, a terminal, and a network side device.

### BACKGROUND

From a perspective of signal transmission, there is a delay from a time of generating a digital signal by a baseband to a time of sending a radio frequency (Radio Frequency, RF) signal from a Tx antenna. To support positioning, a terminal (User Equipment, LTE) or a transmission and receiving point (transmission and receiving points, TRP) may implement internal calibration/compensation on a Tx time delay (Tx time delay) for transmission of a downlink reference signal for positioning (Downlink Positioning Reference Signal, DL PRS) or an uplink sounding reference signal (Uplink Sounding Reference Signal, UL SRS). A remaining Tx time delay after the calibration or an uncalibrated Tx time delay is defined as a Tx timing error (Tx timing error). From a perspective of signal reception, there is a time delay from reception of an RF signal from an Rx antenna to baseband processing. To support positioning, the UE or the TRP may perform internal calibration/compensation on an Rx time delay (Rx time delay) for a measurement result of a DL PRS or a LTL SRS before performing measurement reporting. A remaining Rx time delay after the calibration or an uncalibrated Rx time delay is defined as an Rx timing error (Rx timing error).

For a time measurement-based positioning method, for example, an RTT-based positioning method and a TDOA-based method, when a location of the UE is calculated, positioning precision is affected by an Rx/Tx timing error of the TRP and the UE.

### SUMMARY

Embodiments of this application provide a timing error group indication method and apparatus, a terminal, and a network side device, to resolve a problem of impact of an Rx/Tx timing error of a TRP and UE on positioning precision in a positioning method.

According to a first aspect, a timing error group indication method is provided, where the method includes:
indicating, by a terminal, first information to a network side device, where the first information is used to assist the network side device in performing positioning calculation; and
the first information includes at least one of the following:
   a first association relationship, where the first association relationship is used to indicate an association relationship between an uplink reference signal for positioning and a first timing error group (TEG); and
   a second association relationship, where the second association relationship is used to indicate an association relationship between a downlink positioning measurement result and a second TEG.

According to a second aspect, a timing error group indication method is provided, applied to a network side device, where the network side device is a base station, and the method includes:
indicating, by the base station, third information to a location server, where the third information is used to assist the location server in performing positioning calculation; and
the third information includes at least one of the following:
   a third association relationship, where the third association relationship is used to indicate an association relationship between a downlink reference signal for positioning and a third timing error group (TEG);
   a fourth association relationship, where the fourth association relationship is used to indicate an association relationship between an uplink positioning measurement result and a fourth TEG; and
   an uplink positioning measurement result.

According to a third aspect, a timing error group indication method is provided, applied to a network side device, where the network side device is a location server, and the method includes:
obtaining, by the location server, first information indicated by a terminal, where the first information is used to assist the location server or a base station in performing positioning calculation, where
the first information includes at least one of the following:
   a first association relationship, where the first association relationship is used to indicate an association relationship between an uplink reference signal for positioning and a first timing error group (TEG); and
   a second association relationship, where the second association relationship is used to indicate an association relationship between a downlink positioning measurement result and a second TEG.

According to a fourth aspect, a timing error group indication apparatus is provided, where the apparatus includes:
a first indication unit, configured to indicate first information to a network side device, where the first information is used to assist the network side device in performing positioning calculation; and
the first information includes at least one of the following:
   a first association relationship, where the first association relationship is used to indicate an association relationship between an uplink reference signal for positioning and a first timing error group (TEG); and
   a second association relationship, where the second association relationship is used to indicate an association relationship between a downlink positioning measurement result and a second TEG;
      and/or
   a first receiving unit, configured to receive second information sent by the network side device, where the second information is used to assist a terminal and/or the network side device in performing positioning calculation; and
   the second information is used to indicate that there is an association relationship between a resource set of a downlink reference signal for positioning and an antenna port of a transmission and receiving point (TRP) and/or between a resource of the downlink reference signal for positioning and the antenna port of the TRP.

According to a fifth aspect, a timing error group indication apparatus is provided, where the apparatus includes:
a third indication unit, configured to indicate third information to a location server, where the third information is used to assist the location server in performing positioning calculation; and
the third information includes at least one of the following:
   a third association relationship, where the third association relationship is used to indicate an association relationship between a downlink reference signal for positioning and a third timing error group (TEG);
   a fourth association relationship, where the fourth association relationship is used to indicate an association relationship between an uplink positioning measurement result and a fourth TEG; and
   an uplink positioning measurement result;
      and/or
   a fourth indication unit, configured to indicate second information to a terminal, where the second information is used to indicate that there is an association relationship between a resource set of a downlink reference signal for positioning and an antenna port of a transmission and receiving point (TRP) and/or between a resource of the downlink reference signal for positioning and the antenna port of the TRP.

According to a sixth aspect, a timing error group indication apparatus is provided, where the apparatus includes:
a second obtaining unit, configured to obtain first information indicated by a terminal, where the first information is used to assist a location server or a base station in performing positioning calculation; and
the first information includes at least one of the following:
   a first association relationship, where the first association relationship is used to indicate an association relationship between an uplink reference signal for positioning and a first timing error group (TEG); and
   a second association relationship, where the second association relationship is used to indicate an association relationship between a downlink positioning measurement result and a second TEG;
      and/or
   a sixth indication unit, configured to indicate second information to the terminal, where the second information is used to indicate that there is an association relationship between a resource set of a downlink reference signal for positioning and an antenna port of a transmission and receiving point (TRP) and/or between a resource of the downlink reference signal for positioning and the antenna port of the TRP.

According to a seventh aspect, a terminal is provided. The terminal includes a processor, a memory, and a program or an instruction stored in the memory and executable on the processor, where the program or the instruction is executed by the processor to implement the steps of the method in the first aspect.

According to an eighth aspect, a terminal is provided, including a processor and a communication interface, where the processor is configured to indicate first information to a network side device, and the communication interface is configured to receive second information sent by the network side device. The first information includes at least one of the following: a first association relationship, where the first association relationship is used to indicate an association relationship between an uplink reference signal for positioning and a first timing error group (TEG); and a second association relationship, where the second association relationship is used to indicate an association relationship between a downlink positioning measurement result and a second TEG; and the second information is used to assist a terminal and/or the network side device in performing positioning calculation; where the second information is used to indicate that there is an association relationship between a resource set of a downlink reference signal for positioning and an antenna port of a transmission and receiving point (TRP) and/or between a resource of the downlink reference signal for positioning and the antenna port of the TRP.

According to a ninth aspect, a network side device is provided. The network side device includes a processor, a memory, and a program or an instruction stored in the memory and executable on the processor, where the program or the instruction is executed by the processor to implement the steps of the method in the second aspect or the steps of the method in the third aspect.

According to a tenth aspect, a network side device is provided, including a processor and a communication interface, where the processor is configured to indicate third information to a location server, where the third information is used to assist the location server in performing positioning calculation; and the third information includes at least one of the following: a third association relationship, where the third association relationship is used to indicate an association relationship between a downlink reference signal for positioning and a third timing error group (TEG); and a fourth association relationship, where the fourth association relationship is used to indicate an association relationship between an uplink positioning measurement result and a fourth TEG; and/or the processor is configured to indicate second information to a terminal, where the second information is used to indicate that there is an association relationship between a resource set of a downlink reference signal for positioning and an antenna port of a transmission and receiving point (TRP) and/or between a resource of the downlink reference signal for positioning and the antenna port of the TRP.

According to an eleventh aspect, a network side device is provided, including a processor and a communication interface, where the processor is configured to: obtain first information indicated by a terminal, where the first information is used to assist the location server or a base station in performing positioning calculation, where the first information includes at least one of the following: a first association relationship, where the first association relationship is used to indicate an association relationship between an uplink reference signal for positioning and a first timing error group (TEG); and a second association relationship, where the second association relationship is used to indicate an association relationship between a downlink positioning measurement result and a second TEG; and/or indicate second information to the terminal, where the second information is used to indicate that there is an association relationship between a resource set of a downlink reference signal for positioning and an antenna port of a transmission and receiving point (TRP) and/or between a resource of the downlink reference signal for positioning and the antenna port of the TRP.

According to a twelfth aspect, a readable storage medium is provided, where a program or an instruction is stored in the readable storage medium, and the program or the instruction is executed by a processor to implement the steps of the timing error group indication method in the first aspect, the steps of the timing error group indication method in the second aspect, or the steps of the timing error group indication method in the third aspect.

According to a thirteenth aspect, a chip is provided, where the chip includes a processor and a communication interface, the communication interface is coupled to the processor, and the processor is configured to run a program or an instruction to implement the timing error group indication method in the first aspect, or the timing error group indication method in the second aspect, or the timing error group indication method in the third aspect.

According to a fourteenth aspect, a computer program/program product is provided, where the computer program/program product is stored in a non-volatile storage medium, and the program/program product is executed by at least one processor to implement the steps of the timing error group indication method in the first aspect, or the steps of the timing error group indication method in the second aspect, or the steps of the timing error group indication method in the third aspect.

In the embodiments of this application, a terminal indicates first information to a network side device and/or receives second information, to assist the network side device in positioning calculation, thereby reducing or eliminating impact of a timing error group on positioning precision and improving positioning precision.

### BRIEF DESCRIPTION OF DRAWINGS

FIG. 1 is a block diagram of a wireless communication system applicable to the embodiments of this application;
FIG. 2 is a first schematic flowchart of a timing error group indication method according to an embodiment of this application;
FIG. 3 is a schematic diagram of an event trigger indication manner according to an embodiment of this application;
FIG. 4 is a schematic diagram of an aperiodic indication manner according to an embodiment of this application;
FIG. 5 is a schematic diagram of a periodic indication manner according to an embodiment of this application;
FIG. 6 is a second schematic flowchart of a timing error group indication method according to an embodiment of this application;
FIG. 7 is a third schematic flowchart of a timing error group indication method according to an embodiment of this application;
FIG. 8 is a first schematic structural diagram of a timing error group indication apparatus according to an embodiment of this application;
FIG. 9 is a second schematic structural diagram of a timing error group indication apparatus according to an embodiment of this application;
FIG. 10 is a third schematic structural diagram of a timing error group indication apparatus according to an embodiment of this application;
FIG. 11 is a schematic structural diagram of a communication device according to an embodiment of this application;
FIG. 12 is a schematic structural diagram of hardware of a terminal according to an embodiment of this application; and
FIG. 13 is a schematic structural diagram of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects but do not describe a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6^{th} Generation, 6G) communication system.

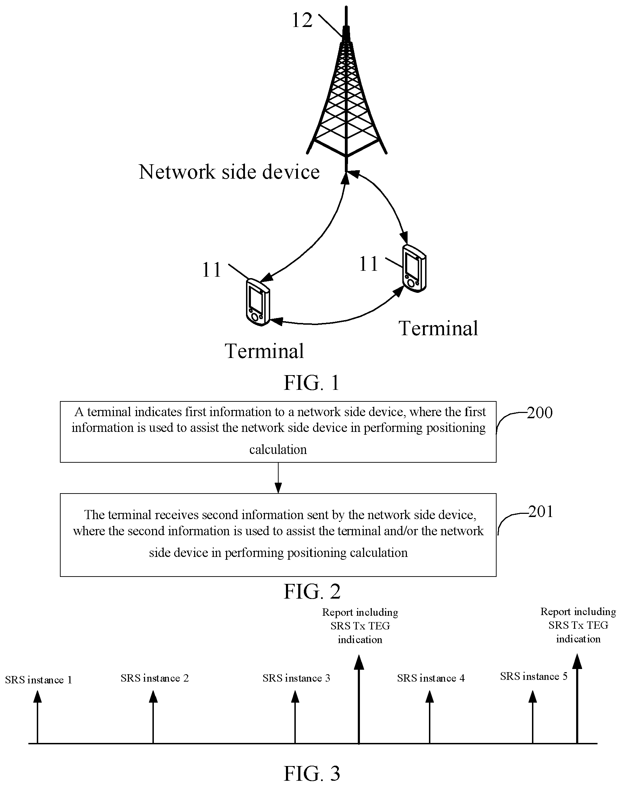

FIG. 1 is a block diagram of a wireless communication system to which embodiments of this application can be applied. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VLTE), or pedestrian user equipment (PUE). The wearable device includes a smart watch, a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, the following describes in detail a timing error group indication method and apparatus, a terminal, and a network side device provided in the embodiments of this application by using some embodiments and application scenes.

FIG. 2 is a first schematic flowchart of a timing error group indication method according to an embodiment of this application. As shown in FIG. 2, the timing error group indication method includes the following steps:

Step 200: A terminal indicates first information to a network side device, where the first information is used to assist the network side device in performing positioning calculation.

The first information includes at least one of the following:
a first association relationship, where the first association relationship is used to indicate an association relationship between an uplink reference signal for positioning and a first timing error group (TEG); and
a second association relationship, where the second association relationship is used to indicate an association relationship between a downlink positioning measurement result and a second TEG.

A timing error group (Timing error group, TEG) may also be referred to as a panel (that is, an antenna panel).

The timing error group includes at least one of the following: a Tx TEG, an Rx TEG, an RxTx TEG, and {Rx TEG, Tx TEG}.

For a terminal side, the timing error group includes at least one of the following: a UE Tx TEG, a UE Rx TEG, a UE RxTx TEG, and {UE Rx TEG, UE Tx TEG}. For a network side, the timing error group includes one of the following: a TRP Tx TEG, a TRP Rx TEG, a TRP RxTx TEG, and {TRP Rx TEG, TRP Tx TEG}.

In this embodiment of this application, the first TEG includes at least one of the following: a Tx TEG and an RxTx TEG, that is, a UE Tx TEG and a UE RxTx TEG.

Optionally, the first TEG is a timing error group in which the terminal sends an uplink reference signal for positioning.

The second TEG includes at least one of the following: an Rx TEG, an RxTx TEG, and {Rx TEG, Tx TEG}, that is, a UE Rx TEG, a UE RxTx TEG, and {UE Rx TEG, UE Tx TEG}.

Optionally, the second TEG is a timing error group in which the terminal receives a downlink reference signal for positioning.

It should be noted that the terminal in this embodiment of this application is not limited to a terminal in a connected state, a terminal in an idle state, or a terminal in an inactive state. The network side device in this embodiment of this application is a location management function (Location Management Function, LMF) or a base station. The base station includes a serving gNB and/or a neighboring gNB.

Optionally, in an idle state or an inactive state, a manner in which the terminal sends information to the network device includes but is not limited to at least one of the following: SDT (small data transmission, small data transmission), a manner the same as reporting of positioning measurement information in an idle state or an inactive state, and the like. A manner in which the network device sends information to the terminal device includes but is not limited to at least one of the following: a broadcast message, an RRC release (release) message, a random access message (such as Msg2, MsgB, or Msg4), a paging message, and the like.

Optionally, signaling between a location server and LTE includes but is not limited to at least one of the following: an LTE positioning protocol (LTE Positioning Protocol, LPP), an NR positioning protocol (NR Positioning Protocol, NRPP), a combination between an NR positioning protocol annex (NR Positioning Protocol Annex, NRPPa) and (signaling between a gNB and the UE), and a combination between an LTE positioning protocol annex (LTE Positioning Protocol Annex, LPPa) and (signaling between the gNB and the UE).

Downlink signaling between the gNB and the LTE includes but is not limited to at least one of the following: RRC, a MAC CE, downlink control information (Downlink Control Information, DCI), a random access message (including but not limited to Msg2, Msg4, and MsgB), a broadcast message, and paging.

Uplink signaling between the UE and the gNB includes but is not limited to at least one of the following: RRC, a MAC CE, UCI, and a random access message: including but is not limited to Msg1, Msg3, and MsgA.

Signaling between the gNB and the location server includes but is not limited to one of the following: an LPPa and NRPPa.

To reduce or eliminate impact of an Rx/Tx timing error on positioning precision, in this embodiment of this application, the terminal indicates the association relationship between the uplink reference signal for positioning and the first timing error group (TEG) and/or the association relationship between the downlink positioning measurement result and the second TEG to the network side device, to assist the network side device in performing positioning calculation.

The association relationship may be represented by an associated TEG identifier ID, or uplink reference signals for positioning or downlink positioning measurement results of a same TEG are grouped into one group, or may be represented in another manner.

The uplink reference signal for positioning may be an SRS or another signal for uplink positioning. The SRS may be an SRS for positioning or an SRS used for multi-antenna transmission.

The downlink positioning measurement result is obtained by the terminal by measuring a received downlink reference signal for positioning.

The downlink reference signal for positioning may be a PRS or another signal for downlink positioning.

The downlink positioning measurement result includes at least one of the following: a downlink reference signal time difference (Downlink Reference Signal Time Difference, DL RSTD), a UE receive-transmit time difference (UE Rx-Tx time difference) measurement result, and another type of downlink measurement result.

The another type of downlink measurement result may be DL-RSRP. This is not specifically limited in this application.

Optionally, during downlink positioning, same UE may receive downlink reference signals for positioning such as PRSs from a plurality of TRPs, and obtain a plurality of downlink positioning measurement results. If the plurality of downlink positioning measurement results may be associated with a same UE Rx TEG, a difference may be made when the plurality of downlink positioning measurement results are processed, to eliminate a same terminal receive timing error (LTE Rx timing error). Optionally, when reporting a downlink positioning measurement result to the network side device (for example, a location server), the terminal may indicate an association relationship between the downlink positioning measurement result and a LTE Rx TEG, to assist the network device in completing further positioning calculation.

Optionally, during uplink positioning, when sending an uplink reference signal for positioning (for example, an SRS), the UE may indicate an association relationship between the SRS and a UE Tx TEG.

Optionally, during downlink and uplink positioning, for example, an RTT positioning method, the UE reports a measurement result of an Rx-Tx time difference, to indicate an association relationship between the measurement result and a UE Tx TEG and a UE Rx TEG.

And/Or
Step 201: The terminal receives second information sent by the network side device, where the second information is used to assist the terminal and/or the network side device in performing positioning calculation.

The performing positioning calculation includes positioning calculation based on a downlink angle of arrival or positioning calculation related to an antenna port.

The second information is used to indicate that there is an association relationship between a resource set of a downlink reference signal for positioning and an antenna port of a transmission and receiving point (TRP) and/or between a resource of the downlink reference signal for positioning and the antenna port of the TRP.

In this embodiment of this application, first information is indicated to a network side device and/or second information is received, to assist the network side device in performing positioning calculation, thereby reducing or eliminating impact of a timing error group on positioning precision and improving positioning precision.

Optionally, after receiving the second information sent by the network side device, the terminal performs one of the following:
assuming, by the LTE, that there is an association relationship between a plurality of resource sets of downlink reference signal for positioning and a plurality antenna ports in a TRP;
assuming, by the LTE, that there is an association relationship between a plurality of resources of downlink reference signal for positioning in a resource set of a downlink reference signal for positioning and a plurality of antenna ports in a TRP; and
assuming, by the LTE, that there is an association relationship between a plurality of repeated resources of downlink reference signals for positioning corresponding to a same resource identifier of a downlink reference signal for positioning and a plurality of antenna ports in a TRP.

The association relationship is to send a PRS resource set, a PRS resource, and/or a repeated PRS resource from a specified port of a TRP.

Optionally, that there is an association relationship between a plurality of resource sets of downlink reference signals for positioning and a plurality of antenna ports in a TRP includes one of the following that:

Different resource sets of downlink reference signal for positioning are associated with different groups of antenna ports in a TRP. For example, there are two PRS resource sets and eight TRP ports, where each resource set corresponds to two port groups in the TRP, and one port group in the TRP includes four antenna ports.

At least one resource set of a downlink reference signal for positioning is associated with one group of antenna ports in a TRP. For example, there are two PRS resource sets and eight TRP ports, where one PRS resource set is associated with all TRP ports, and the other PRS resource set is also associated with all TRP ports.

One group of antenna ports in a TRP include at least one TRP antenna port. Optionally, one group of antenna ports in a TRP herein may alternatively correspond to one TRP panel or one TRP Tx TEG (or TRP RxTx TEG).

Optionally, that there is an association relationship between a plurality of resources of downlink reference signals for positioning in a resource set of a downlink reference signal for positioning and a plurality of antenna ports in a TRP includes one of the following that:

Different resources of downlink reference signal for positioning in the resource set of the downlink reference signal for positioning are associated with different antenna ports in a TRP. For example, a PRS resource set has eight PRS resources, and the PRS resource set is associated with eight ports of TRP, where each resource corresponds to one port of TRP.

At least one resource of a downlink reference signal for positioning in the resource set of the downlink reference signal for positioning is associated with a same antenna port of TRP, where
one resource of a downlink reference signal for positioning is associated with one or more antenna ports in a TRP.

For example, a PRS resource set has eight PRS resources, and the PRS resource set is associated with four TRP ports. Each two PRS resources correspond to one TRP port; or one PRS resource corresponds to one TRP port, another PRS resource corresponds to another TRP port, and remaining six PRS resources equally correspond to remaining two ports.

A correspondence/association manner between a PRS resource and a TRP port may be specified in a protocol, or may be indicated by the network side device (for example, indicating that a specified PRS resource corresponds to a specified TRP antenna port).

Optionally, that there is an association relationship between a plurality of repeated resources of downlink reference signal for positioning corresponding to a same resource identifier of downlink reference signal for positioning and a plurality of antenna ports in a TRP includes one of the following that:

Different repeated resources of downlink reference signal for positioning are associated with different antenna ports in a TRP. For example, one PRS resource is associated with two ports. A same PRS resource identifier corresponds to two repeated PRS resources, and each corresponds to one port.

At least one repeated resource of a downlink reference signal for positioning is associated with a same antenna port of TRP. For example, one PRS resource is associated with one port. A same PRS resource identifier corresponds to two repeated PRS resources, and the two repeated PRS resources correspond to a same port. Alternatively, one PRS resource is associated with two ports. A same PRS resource identifier corresponds to four repeated PRS resources, two repeated PRS resources correspond to a same port, and the other two repeated resources correspond to the other port.

Optionally, the resource set of the downlink reference signal for positioning, and/or the resource of the downlink reference signal for positioning, and/or resource for repetition of the downlink reference signal for positioning needs to be associated with all antenna ports in a TRP.

Optionally, the second information further includes a function indication of the resource set of the downlink reference signal for positioning and/or the resource of the downlink reference signal for positioning.

Optionally, after the receiving, by the terminal, second information sent by the network side device, the method further includes:
measuring, by the terminal, channels of different ports, and performing a codebook traversal process to obtain a best codebook and/or a best angle of departure (angle of departure, AOD) matching a channel. After the terminal receives the second information sent by the network device, behavior of the terminal may be determined through at least one of protocol agreement, network indication, and terminal selection.

Optionally, the second information further includes at least one of the following:
an association relationship between a resource set of a downlink reference signal for positioning and a antenna port of TRP;
an association relationship between a resource of a downlink reference signal for positioning and a antenna port of TRP; and
an association relationship between a repeated resource of a downlink reference signal for positioning and a antenna port of TRP.

Optionally, before the indicating, by a terminal, first information to a network side device, the method further includes:
receiving, by the terminal, a first request message sent by the network side device, where the first request message is used to request the terminal to indicate the first information.

Optionally, for a scenario in which a positioning precision requirement is not high, the network side device may require the terminal not to provide the first information. Therefore, the "first request message" may not be enabled.

Optionally, when the terminal indicates the first information in this application, the "indication of the network side device" may be included in the first request message.

The following further describes how the terminal indicates the first information to the network side device.

In some optional embodiments, the first information includes the first association relationship, and the indicating, by a terminal, first information to a network side device includes at least one of the following:
indicating the first association relationship by using a sequence of an uplink reference signal for positioning;
indicating the first association relationship in a mapping manner of an uplink reference signal for positioning;
indicating the first association relationship in an event trigger manner;
aperiodically indicating the first association relationship; and
periodically indicating the first association relationship.

The uplink reference signal for positioning may be an SRS or another signal for uplink positioning.

It should be noted that the uplink reference signal for positioning may be a resource of an uplink reference signal for positioning or a resource set of an uplink reference signal for positioning. There may be one or more resources of uplink reference signals for positioning, and there may be one or more resource sets of uplink reference signals for positioning.

Optionally, the SRS may be an SRS resource or an SRS resource set. There may be one or more SRS resources, and there may be one or more SRS resource sets.

Optionally, that the terminal indicates the first association relationship, that is, that the terminal indicates the association relationship between the uplink reference signal for positioning and the first timing error group (TEG) includes at least one of the following manners:
indicating the first association relationship by using a sequence of an uplink reference signal for positioning.

Optionally, the association relationship between the uplink reference signal for positioning and the first TEG is represented by the sequence of the uplink reference signal for positioning. For example, for a same SRS resource, a Tx TEG changes between different periods (or SRS instances), and sequences in different periods of the same SRS resource are different. It can be understood that an SRS for positioning currently supports only one port. An SRS associated with different TEGs may be considered as extending the SRS to a plurality of ports, and each port associating with the SRS is equivalent to each Tx TEG associating with the SRS.

Optionally, the sequence of the uplink reference signal for positioning is generated according to a cyclic shift corresponding to the first TEG associated with the uplink reference signal for positioning, and different first TEGs correspond to different cyclic shifts.

Different cyclic shifts distinguish different first TEGs and are related to a quantity of Tx TEGs.

In an implementation, for example, the uplink reference signal for positioning is an SRS. A group of cyclic shifts are determined through network indication or protocol agreement, and SRSs associated with different TEGs correspond to respective cyclic shift values to generate SRS sequences. When a TEG 0 is associated with an SRS, the UE generates a sequence and sends the sequence by using a cyclic shift corresponding to the TEG 0. When a TEG 1 is associated with an SRS, the UE generates a sequence and sends the sequence by using a cyclic shift corresponding to the TEG 1.

Optionally, the first association relationship is indicated in the mapping manner of the uplink reference signal for positioning.

Optionally, the association relationship between the uplink reference signal for positioning and the first TEG is represented in the mapping manner of the uplink reference signal for positioning. For example, for a same SRS resource, a Tx TEG changes in different periods, and mapping patterns in different periods of the same SRS resource are different.

Optionally, the mapping manner of the uplink reference signal for positioning is determined according to a time-frequency location corresponding to the first TEG associated with the uplink reference signal for positioning, and different first TEGs are distinguished through frequency division multiplexing (Frequency Division Multiplexing, FDM).

FDM distinguishes different TEGs and is related to a quantity of Tx TEGs.

In an optional implementation, SRSs associated with different TEGs may be mapped to different resource elements (Resource element, RE) on a same symbol, and are distinguished through FDM. When a TEG 1 is associated with an SRS, the UE sends the SRS by using a time-frequency location corresponding to the TEG 1.

Optionally, when the LTE supports a plurality of first TEGs, the plurality of first TEGs may be jointly distinguished with reference to the sequence and the mapping manner of the uplink reference signal for positioning.

Optionally, before the terminal indicates the first association relationship by using the sequence of the uplink reference signal for positioning or in the mapping manner of the uplink reference signal for positioning, the method further includes:
receiving, by the terminal, first indication signaling sent by the network side device, where the first indication signaling is used to indicate the terminal to enable a function of indicating the first association relationship by using the sequence of the uplink reference signal for positioning and/or using the mapping manner of the uplink reference signal for positioning; and
enabling, by the terminal, the function of indicating the first association relationship by using the sequence of the uplink reference signal for positioning and/or using the mapping manner of the uplink reference signal for positioning.

Optionally, the network side device may instruct whether to enable the function of "representing an association relationship between an SRS and a TEG by using the sequence and/or the mapping manner", for example, by using a switch.

In an implementation, when a serving gNB receives a request from a location server, for example, requesting to obtain (in real time) an association relationship between an SRS and a Tx TEG. The serving gNB may instruct the UE to enable the switch. The UE indicates the association relationship between an SRS and a Tx TEG according to the instruction by using a sequence and/or a mapping manner. For example, in a scenario in which the LTE supports/is associated with only one Tx TEG, or a scenario in which a positioning precision requirement is not high, the switch is set to Off or a default indication.

Optionally, the sequence of the uplink reference signal for positioning and/or the mapping manner of the uplink reference signal for positioning is obtained in at least one manner of protocol agreement, network indication, and terminal selection. That is, whether the terminal uses the "sequence manner", the "mapping manner", or the "sequence+mapping" manner to indicate the relationship between the uplink reference signal for positioning and the first TEG may be determined through protocol agreement, network indication, and/or terminal selection.

Optionally, the association relationship between the uplink reference signal for positioning and the first TEG may be explicitly indicated, including at least one of the following manners:
indicating the first association relationship in an event trigger manner;
aperiodically indicating the first association relationship; and
periodically indicating the first association relationship.

Optionally, the indicating the first association relationship in an event trigger manner includes:
in a case that the first TEG associated with the uplink reference signal for positioning changes in a process of transmitting the uplink reference signal for positioning, triggering the terminal to send TEG indication signaling, where
the TEG indication signaling is used to indicate the first association relationship or indicate that the first association relationship changes.

For example, in a transmission process of an SRS, if a TEG associated with the SRS changes, the UE is triggered to send TEG indication signaling to indicate the association relationship between the SRS and the TEG or a change of the association relationship.

Optionally, before the terminal sends the TEG indication signaling, the method further includes:
sending, by the terminal, second indication signaling at least once, where the second indication signaling is used to indicate the first association relationship.

It can be understood that before the event trigger indication, the UE indicates the association relationship between the uplink reference signal for positioning and the first TEG at least once.

Optionally, content of the TEG indication signaling includes one of the following:
indicating that an association relationship between an uplink reference signal for positioning in a latest instance of an uplink reference signal for positioning and a first TEG before the TEG indication signaling changes, and the TEG indication signaling takes effect until a latest second instance of an uplink reference signal for positioning before next TEG indication signaling; and
indicating that an association relationship between an uplink reference signal for positioning in a latest instance of an uplink reference signal for positioning and a first TEG after the TEG indication signaling changes, and the TEG indication signaling takes effect until a latest instance of an uplink reference signal for positioning before the next TEG indication signaling.

That an association relationship changes means that an association relationship between an uplink reference signal for positioning in this period and a first TEG changes compared with that between an uplink reference signal for positioning in a previous period and a first TEG.

It can be understood that "indicating that an association relationship between an uplink reference signal for positioning in a latest instance of an uplink reference signal for positioning and a first TEG before the TEG indication signaling changes" may be alternatively expressed as "indicating an association relationship between an uplink reference signal for positioning in a latest instance of an uplink reference signal for positioning and a first TEG before the TEG indication signaling".

"Indicating that an association relationship between an uplink reference signal for positioning in a latest instance of an uplink reference signal for positioning and a first TEG after the TEG indication signaling changes" may be alternatively expressed as "indicating an association relationship between an uplink reference signal for positioning in a latest instance of an uplink reference signal for positioning and a first TEG after the TEG indication signaling".

The TEG indication signaling indicates an effective time in addition to an association relationship or a change of an association relationship. An association relationship between an uplink reference signal for positioning and a first TEG keeps unchanged within the effective time.

Taking an SRS an example, a relationship between an uplink reference signal in a instance of a specified uplink reference signal for positioning and a first TEG may be understood as an association relationship between all SRS resources or SRS resource sets and the first TEG, an association relationship between a specified SRS resource or SRS resource set and the first TEG, or an association relationship between several SRS resources or SRS resource sets in this SRS instance and the first TEG.

The following describes, by using a specific example, that the first association relationship is indicated in the event trigger manner. FIG. 3 is a schematic diagram of an event trigger indication manner according to an embodiment of this application.

### Manner 1:

For a specified SRS instance X (an SRS instance 3 in FIG. 3), if an association relationship between an SRS and a Tx TEG changes compared to an SRS instance A (this event occurs, where event information may be specified by the protocol or indicated by the network), the UE is triggered to indicate the association relationship between the SRS in the SRS instance X and the Tx TEG or a change in the association relationship. The SRS instance A may be one of the following:
a first SRS instance;
a previous SRS instance before the SRS instance X; and
another specified SRS instance determined through network indication/protocol agreement/UE selection.

Herein, the signaling indication takes effect from a last SRS instance before the signaling to last two SRS instances before next signaling (for example, an SRS instance 3 and an SRS instance 4). In a plurality of SRS instances within the effective time, a relationship between an SRS and a TEG keeps unchanged.

Optionally, the UE indicates that signaling of the SRS instance X is not later than time T after the SRS instance X, where T may be specified by the protocol or indicated by the network.

Optionally, before the event trigger indication, the LTE reports an association relationship between an SRS and a Tx TEG at least once, for example, reports an association relationship in an initial SRS sending stage (for example, a first SRS instance), or an association relationship in a specified SRS instance/some SRS instances (network indication/protocol agreement/UE selection).

### Manner 2:

The UE expects an association relationship between an SRS of a specified SRS instance and a Tx TEG to change. For example, the UE completes panel switching (the relationship between the SRS and the Tx TEG is expected to change later), and the UE is triggered to indicate a change of the relationship. In this manner, the signaling indicates an association relationship between an SRS in a time period after the signaling and before next signaling and a TEG. As shown in FIG. 3, first indication signaling indicates an association relationship between an SRS in an SRS instance 3 and an SRS instance 4 and a TEG.

Optionally, before the event trigger indication, the LTE reports an association relationship between an SRS and a Tx TEG at least once, for example, reports an association relationship in an initial SRS sending stage (for example, a first SRS instance), or an association relationship in a specified SRS instance/some SRS instances (network indication/protocol agreement/UE selection).

Optionally, the aperiodically indicating the first association relationship includes:
sending, by the terminal, third indication signaling at a first moment t, where the third indication signaling is used to indicate an association relationship between an uplink reference signal for positioning in an instance of an uplink reference signal for positioning within a first time window before the first moment t and a first TEG; and
the first time window includes latest P instances of uplink reference signals for positioning before the first moment t, P is a positive integer, and P is obtained in at least one manner of protocol agreement, network indication, and terminal selection.

Optionally, the first moment t is a reporting moment of the UE. The first moment t is indicated by the network side device by using downlink control information DCI signaling and an offset.

The DCI signaling is used to trigger aperiodic sending of an uplink reference signal for positioning.

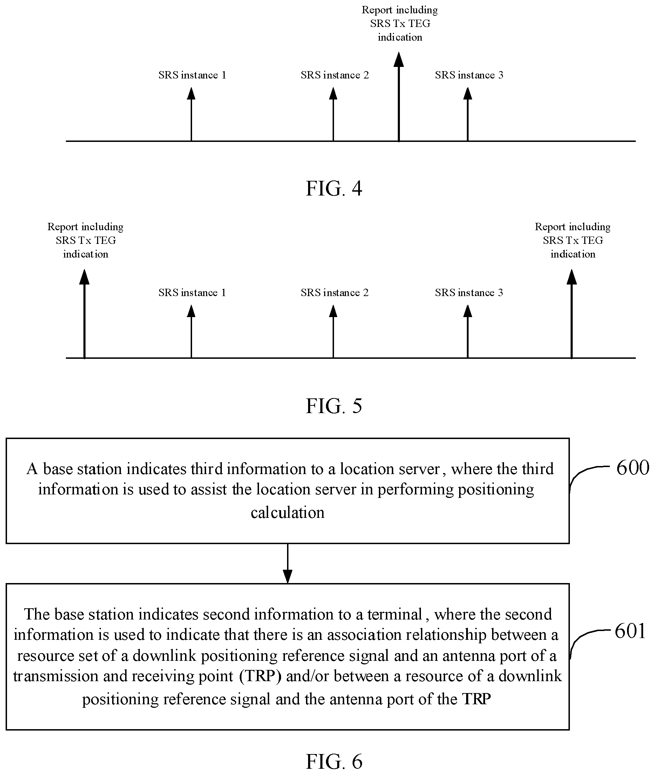

The following describes the aperiodically indicating the first association relationship by using a specific example. FIG. 4 is a schematic diagram of an aperiodic indication manner according to an embodiment of this application.

If a time indicated for reporting by the LTE is t, the LTE reports an association relationship between an SRS in an SRS instance within a specified time window before t and a TEG.

Optionally, the time window includes N latest SRS instances before t. N is a positive integer, and may be determined through protocol agreement/network indication/UE selection. For example, when N is 1, a measurement result of one SRS instance before the indication signaling is reported, as shown in an SRS instance 2 in FIG. 4.

Optionally, the time t may be indicated by the network, for example, DCI signaling+offset. Optionally, DCI signaling may be DCI for triggering an aperiodic SRS.

Optionally, the periodically indicating the first association relationship includes:
sending fourth indication signaling according to a period T and/or a period offset, where the fourth indication signaling is used to indicate an association relationship between uplink reference signals for positioning at adjacent period intervals (including at least one instance of an uplink reference signal for positioning) and a first TEG.

The period T and/or the period offset are/is obtained in at least one manner of protocol agreement, network indication, and terminal selection.

The periodically indicating is generally: the terminal sends an indication according to a network configuration period and/or a period offset; or the terminal may first receive a network preconfiguration period and/or an offset, and then receive an activation indication (for example, MAC CE activation signaling) of the network, and the terminal is activated to send an indication.

Optionally, the period T is related to a sending period of an uplink reference signal for positioning. For example, the period T is Q times of an SRS period, and Q is a positive integer.

Optionally, the period T is related to a period in which the base station gNB reports an uplink positioning measurement result. For example, the period T is Q times of an SRS measurement result period reported by the gNB, and Q is a positive integer.

Optionally, in a case that an association relationship between an uplink reference signal for positioning sent in a specified period and a first TEG is consistent with an association relationship between an uplink reference signal for positioning sent in a previous period or a first period and a first TEG, the 1-bit fourth indication signaling is used to indicate that the association relationship has no change or has a default indication.

The following further describes the periodically indicating the first association relationship by using a specific example. FIG. 5 is a schematic diagram of a periodic indication manner according to an embodiment of this application.

### Manner 3:

For a specified measurement report, an association relationship between an SRS in each SRS instance and a Tx TEG in the current report and a previous report is reported. As shown in FIG. 5, an association relationship between SRSs in three SRS instances and a Tx TEG is reported.

### Manner 4:

(1) An association relationship between an SRS in a first SRS instance (for example, an SRS instance 1) and a Tx TEG in a current report is indicated.

"The first SRS instance" is not specifically limited in this embodiment of this application. The first SRS instance herein may also be represented as an "N^{th} SRS instance", a "reference SRS instance", or specified SRS instance determined through protocol agreement, network indication, or LTE selection.

The association relationship between the SRS in the first SRS instance and the Tx TEG may be indicated in one of the following manners:
In each report, the association relationship between the SRS in the first SRS instance and the Tx TEG needs to be clearly indicated.

If it is different from an association relationship in the first SRS instance in the first report, it is explicitly indicated; otherwise, it is indicated by default (it is considered that this is the same as the association relationship in the first SRS instance in the first report).

If it is different from an association relationship in the first SRS instance in the previous report, it is explicitly indicated; otherwise, it is indicated by default (it is considered that this is the same as the association relationship in the first SRS instance in the previous report).

If it is different from an association relationship in a last SRS instance in the previous report, it is explicitly indicated; otherwise, it is indicated by default (it is considered that this is the same as the association relationship in the last SRS instance in the previous report).

(2) An association relationship between SRSs in subsequent SRS instances (for example, an SRS instance 2 and an SRS instance 3) and a Tx TEG in the current report is indicated in a plurality of sub-manners, including one of the following that:
If an association relationship between an SRS in the subsequent SRS instance and a Tx TEG is different from that in the first SRS instance, it is explicitly indicated; otherwise, it is indicated by default (it is considered that this is the same as the association relationship in the first SRS instance).

If an association relationship between an SRS in a specified SRS instance and a Tx TEG changes compared with an association relationship between an SRS in a previous SRS instance and a Tx TEG, it is explicitly indicated; otherwise, it is indicated by default (it is considered that this is the same as the association relationship in the previous SRS instance).

Optionally, signaling for explicit indication includes at least one of uplink control information (Uplink Control Information, UCI) signaling, Media Access Control control element (MAC Control Element, MAC CE) signaling, radio resource control (Radio Resource Control, RRC) signaling, and Long Term Evolution positioning protocol (LTE Positioning Protocol, LPP) signaling.

Optionally, the periodically indicating the first association relationship includes:
indicating the first association relationship in a terminal receive-transmit time difference (LTE Rx-Tx time difference) measurement report.

Optionally, in an RTT positioning method (or Multi-RTT positioning method), the UE periodically indicates the association relationship between the uplink reference signal for positioning and the first TEG, which may be included in the UE Rx-Tx time difference measurement report.

Optionally, the first association relationship includes identifier information of an uplink reference signal for positioning; and
the identifier information of the uplink reference signal for positioning includes at least one of the following:
resource set identifier ID of an uplink reference signal for positioning;
resource ID of an uplink reference signal for positioning;
a serving cell ID (serving cell ID) or a carrier ID;
a bandwidth part (BWP) ID;
a bandwidth indicator;
a time stamp corresponding to an instance of an uplink reference signal for positioning;
an instance of an uplink reference signal for positioning identifier; and
frequency domain location information of a carrier and/or a BWP on which an uplink reference signal for positioning is located.

The frequency domain location information includes but is not limited to a start location, a bandwidth, an SCS, a point A, and the like of the carrier and/or the BWP.

Certainly, the frequency domain location information may also be replaced with other information that can identify the carrier and/or the BWP on which the uplink reference signal for positioning is located.

Optionally, the first information includes the second association relationship, and the indicating, by a terminal, first information to a network side device includes:
in a case that a downlink positioning measurement result includes a downlink reference signal time difference (DL-RSTD), a receive-transmit time difference (Rx-Tx time difference), or another type of downlink measurement result, for a target positioning measurement result, indicating, by the terminal, an association relationship between the target positioning measurement result and N second TEGs, where
the target positioning measurement result is a positioning measurement result obtained by the terminal by measuring a resource of a target downlink reference signal for positioning.

It can be understood that the target positioning measurement result is a downlink positioning measurement result of a resource of a specified downlink reference signal for positioning (for example, a PRS resource).

The terminal indicates the target positioning measurement result and the associated N second TEGs, N is a positive integer greater than or equal to 1, and N is obtained in at least one manner of protocol agreement, network indication, and terminal selection.

In this embodiment of this application, the second association relationship is used to indicate the association relationship between the downlink positioning measurement result and the second TEG, where the second TEG may be at least one of an Rx TEG, an RxTx TEG, and {Rx TEG, Tx TEG}.

It can be understood that in some embodiments, the second TEG is an Rx TEG.

Optionally, the downlink positioning measurement result is related to N receive timing error groups Rx TEGs, indicating that the LTE receives a same resource of a downlink reference signal for positioning by using a plurality of Rx panels at a same moment.

Alternatively, a same resource of a downlink reference signal for positioning is repeatedly sent (that is, repetition is configured), and a receive panel Rx panel is switched when the UE performs receive beam sweeping Rx beam sweeping.

Alternatively, an Rx panel is switched when signals are received in different downlink reference signal for positioning periods.

Optionally, the indicating, by the terminal, an association relationship between the target positioning measurement result and N second TEGs includes at least one of the following:
indicating, by the terminal, paths associated with the N second TEGs.

It should be noted that the "indicating, by the terminal, paths associated with the N second TEGs" may also be expressed as "indicating, by the terminal, paths respectively associated with the N second TEGs". It can be understood that the terminal indicates a path associated with each second TEG associated with the target positioning measurement result. The path may be a first path and/or an additional path. That is, per path or per path-group indicates an association relationship with a second TEG.

Optionally, when N=1, the UE reports a second TEG associated with the first path. In other words, when N=1, per PRS resource indicates an association relationship with a second TEG.

Optionally, the terminal indicates receive beam indexes Rx beam indexes associated with the N second TEGs.

It can be understood that the terminal indicates the receive beam indexes respectively associated with the N second TEGs, and indicates that a measurement result associated with a specified Rx TEG is also related to an Rx beam Index.

Optionally, the Rx beam index herein may not be an absolute Rx beam index, and may be used only to distinguish that measurement results associated with Rx TEGs are obtained through different Rx beam measurements.

Optionally, N Rx TEGs are associated with only one Rx beam or not related to an Rx beam, which is indicated by default.

In an implementation, for a specified PRS resource (that is, the resource of the target downlink reference signal for positioning), the UE reports a measurement result of the PRS resource. The measurement result is divided into N groups according to N Rx TEGs. For a specified group of measurement results, in addition to associating a specified TEG and one or more Rx beams, the LTE may report a corresponding Rx beam index. When a plurality of Rx beams are associated, the group of measurement results are obtained through joint measurement of the plurality of Rx beams. When one Rx beam is associated, the group of measurement results are obtained through measurement of a specified Rx beam (certainly, the specified Rx beam may be a best Rx beam selected from a plurality of Rx beams).

Optionally, the terminal instructs that the N second TEGs are obtained by sweeping a plurality of receive beams or by simultaneously measuring the resource of the target downlink reference signal for positioning.

Optionally, the terminal indicates that the associated N Rx TEGs are obtained by sweeping a plurality of receive beams or simultaneously measuring the PRS resource.

Optionally, the terminal indicates time stamps of downlink positioning measurement results associated with the N second TEGs.

The terminal indicates the time stamps of the downlink positioning measurement results associated with the N second TEGs, indicating that measurement results associated with different second TEGs are obtained through different time stamp measurements. Herein, the time stamp may represent measurement in different periods or measurement at different times in a same period.

Optionally, the terminal indicates a time difference between the N second TEGs.

The UE selects or indicates an Rx TEG as a reference, and other N-1 TEGs are used as a minuend for subtraction. Optionally, the reference Rx TEG may be an Rx TEG corresponding to an earliest path of all paths.

Optionally, the terminal indicates location information associated with the N second TEGs in the terminal, where
the location information includes at least one of the following: a distance or a distance difference between locations associated with the N Rx TEGs in the terminal, or a difference between panel locations corresponding to the N Rx TEGs.

Optionally, the terminal reports downlink positioning measurement results associated with the N second TEGs.

Different Rx TEGs correspond to different measurement results. The terminal indicates an association relationship between a measurement result and an Rx TEG, and reports the corresponding measurement result.

Optionally, an association relationship between the target positioning measurement result and the N second TEGs is indicated in downlink positioning measurement results corresponding to different time stamps.

Optionally, the association relationship between the target positioning measurement result and the N second TEGs is consistent with that of the previous (or the first) time, and the terminal may use 1-bit to indicate no change or a default indication.

Optionally, according to network indication or protocol agreement, if a first preset condition is met, the terminal needs to report an association relationship between the target positioning measurement result and a plurality of second TEGs.

The first preset condition includes but is not limited to at least one of the following that:

Quality of downlink positioning measurement results associated with the plurality of second TEGs exceeds a first preset threshold.

For example, a value of a path associated with a plurality of Rx TEGs exceeds a specified threshold (for example, power of a first path exceeds a specified threshold), or RSRP of measurement results associated with a plurality of Rx TEGs exceeds a specified threshold.

The downlink positioning measurement results associated with the plurality of second TEGs are line of sight (Line of sight, LOS) measurement results, or an LOS probability of a downlink positioning measurement result is greater than a second preset threshold.

When the terminal performs receive beam sweeping, different receive beams Rx beams are associated with different second TEGs, and quality of downlink positioning measurement results corresponding to a plurality of receive beams exceeds a third preset threshold.

It should be noted that, generally, when N>1, "a plurality of" herein may be understood as "N"; or when N>1, "a plurality of" may be understood as "at least two". Optionally, "a plurality of" may be less than "N", or "a plurality of" is greater than "N".

Optionally, in another implementation, when the first preset condition is met, the UE may report the association relationship between the target positioning measurement result and the plurality of second TEGs, and/or report the difference between the timing errors of the plurality of second TEGs, and/or compensate for the difference between the timing errors of the plurality of second TEGs in the reported measurement result. Behavior of the UE may be determined in at least one manner of network indication, protocol agreement, and UE selection.

Optionally, that the UE reports the association relationship between the target positioning measurement result and the plurality of second TEGs, and/or reports the difference between the timing errors of the plurality of second TEGs, and/or compensates for the difference between the timing errors of the plurality of second TEGs in the reported measurement result may be determined in at least one manner of network indication, protocol agreement, and UE selection.

Optionally, the indicating, by the terminal, an association relationship between the target positioning measurement result and N second TEGs includes:
in a case that the terminal is configured with a quasi co-location (QCL) relationship of the resource of the target downlink reference signal for positioning, indicating, by the terminal, an association relationship between the target positioning measurement result and one second TEG.

For example, for a specified PRS resource, when the UE is configured with a QCL relationship of the PRS resource, N can only be 1.

Optionally, in a case that the resource of the target downlink reference signal for positioning is configured with a QCL indication, the terminal is not requested to indicate that N>1 second TEGs are associated.

For example, when a specified PRS resource is configured with a QCL indication, the UE does not expect to be requested to indicate that N>1 Rx TEGs are associated.

Optionally, before performing measurement, the terminal receives fifth indication signaling sent by the network side device, where the fifth indication signaling is used to indicate the terminal to measure the resource of the target downlink reference signal for positioning through Rx TEG sweeping.

Rx TEG sweeping may be understood as performing sweeping on a plurality of Rx TEGs on different Rx beams. The network side device sends the fifth indication signaling, to ensure that the UE can calculate a difference between Rx TEGs.

Optionally, that the terminal measures the resource of the target downlink reference signal for positioning through Rx TEG sweeping needs to meet at least one of the following that:
the network side device does not indicate spatial QCL information of the resource of the target downlink reference signal for positioning; and
the network side device indicates the resource of the target downlink reference signal for positioning to be repeated.

Optionally, when the network side device indicates "Rx TEG sweeping", QCL information (for example, QCL-D, that is, a spatial QCL relationship) of the resource of the target downlink reference signal for positioning cannot be simultaneously indicated.

Optionally, when the network side device indicates "Rx TEG sweeping", the resource of the target downlink reference signal for positioning needs to be simultaneously indicated to be repeated. Further, a quantity of repetition times is further required to be greater than a specified threshold.

Optionally, the instructing the terminal to measure the resource of the target downlink reference signal for positioning through Rx TEG sweeping includes at least one of the following:
instructing the terminal to measure the resource of the target downlink reference signal for positioning once through Rx TEG sweeping across M periods, where M is a positive integer, and M is obtained in at least one manner of protocol agreement, network indication, and terminal selection, where "performing measurement once through Rx TEG sweeping across M periods" is "performing measurement once through Rx TEG sweeping in M periods".

Optionally, the terminal is instructed to measure the resource of the target downlink reference signal for positioning once through Rx TEG sweeping across different instances of downlink reference signals for positioning (that is, downlink reference signal for positioning periods).

For example, for a same PRS resource (set), one measurement is performed in a plurality of periods, and beam sweeping may be performed in the plurality of periods.

Optionally, the terminal is instructed to perform sweeping in partial Rx TEGs or the terminal is instructed to perform sweeping across partial Rx TEGs.

That is, the indication "Rx TEG sweeping" may restrict sweeping to only a few Rx TEGs, or indicate which Rx TEG sweeping the UE spans.

Optionally, the terminal is instructed to report downlink positioning measurement results associated with different Rx TEGs.

That is, the indication "Rx TEG sweeping" further includes an indication instructing the terminal to report downlink positioning measurement results associated with different Rx TEGs.

Optionally, when the terminal cannot perform Rx TEG sweeping or report a measurement result according to the instruction of the network side device, the terminal sends a reason why Rx TEG sweeping cannot be performed according to the instruction of the network side device or a reason why the terminal cannot report a downlink positioning measurement result.

For example, the terminal reports that a measurement result associated with a specified Rx TEG is less than a specified threshold.

Optionally, the instructing the terminal to measure the resource of the target downlink reference signal for positioning once through Rx TEG sweeping across M periods further includes at least one of the following:
indicating a total quantity of Rx TEGs in Rx TEG sweeping; and
indicating a quantity of Rx TEGs in Rx TEG sweeping in each instance of a downlink reference signal for positioning.

A instance of a specified downlink reference signal for positioning is a specified period of a downlink reference signal for positioning.

Optionally, M may be an Rx TEG sweeping factor, and the Rx TEG sweeping factor includes a quantity of instances of downlink reference signals for positioning that can be used or used at most by the terminal to complete Rx TEG sweeping once.

In some optional embodiments, the timing error group indication method further includes:
in a case that the terminal indicates N second TEGs and/or measurement results of N second TEGs and/or a plurality of receive beam indexes that are associated with a resource of a first downlink reference signal for positioning, receiving sixth indication signaling sent by the network side device, where the sixth indication signaling is used to indicate the terminal to use the resource of the first downlink reference signal for positioning as a reference resource for the resource of a second downlink reference signal for positioning; and
receiving, by the terminal, the resource of a second downlink reference signal for positioning by using the N second TEGs or the plurality of receive beam indexes that are associated with the resource of a first downlink reference signal for positioning.

It can be understood that for a specified PRS resource, the UE indicates N Rx TEGs and/or measurement results of N Rx TEGs and/or a plurality of Rx beam indexes that are associated with the PRS resource, and the network side device may further indicate that the PRS resource is used as an "Rx TEG reference resource" of another PRS resource. When receiving the indication, the UE receives the another PRS resource in a same receiving manner, that is, receives a PRS resource by using same N Rx TEGs or a plurality of same Rx beams.

In some optional embodiments, the first information includes the second association relationship, and the indicating, by a terminal, first information to a network side device includes:
in a case that a downlink positioning measurement result includes a terminal receive-transmit time difference (UE Rx-Tx time difference), performing, by the terminal, one of the following:
indicating an association relationship among the downlink positioning measurement result, an Rx TEG and a Tx TEG;
indicating an association relationship between the downlink positioning measurement result and an RxTx TEG; and
indicating an association relationship between the downlink positioning measurement result and an Rx TEG.

Optionally, the association relationship between the downlink positioning measurement result and the Rx TEG is an Rx TEG associated when the UE receives the downlink reference signal for positioning.

Optionally, for a specific association relationship between the downlink positioning measurement result and the Rx TEG, refer to the association relationship between the uplink reference signal for positioning and the Tx TEG in the foregoing embodiment, including related information of a downlink reference signal for positioning identifier.

Optionally, the association relationship between the downlink positioning measurement result and the Tx TEG is a Tx TEG associated with an uplink subframe (starting point) corresponding to a transmit time Tx time (TUE-TX measurement) or a Tx TEG associated with a Tx time, or a Tx TEG associated with a reference point corresponding to a Tx time when the UE determines an Rx-Tx time difference value.

In an implementation, in one RxTx TEG, the LTE may indicate at least one group of {PRS resources, SRS resources}, and the at least one group is located in a same RxTx TEG, or shares a same RxTx TEG ID. PRS resources and SRS resources between different groups are not in a same RxTx TEG. PRS resources and Rx-Tx time difference measurement are used to determine an Rx time, and SRS resources and Rx-Tx time difference measurement are used to determine a Tx time.

Optionally, the PRS resources may be indicated by at least one of a TRP ID (dl-PRS-ID in the protocol), a PRS resource set ID, and a PRS resource ID.

Optionally, the SRS resources may be indicated by at least one of an SRS resource set ID, an SRS resource ID, a serving cell identifier serving cell ID or a carrier identifier, a bandwidth part identifier BWP ID, a bandwidth indicator, a time stamp or an SRS instance identifier corresponding to an SRS instance, and frequency domain location information of a carrier or a BWP on which an SRS is located.

The frequency domain location information includes but is not limited to a start location, a bandwidth, an SCS, a point A, and the like of the carrier and/or the BWP. The frequency domain location information may also be replaced with other information that can identify the carrier and/or the BWP on which the SRS is located.

Optionally, the association relationship between the downlink positioning measurement result and which type of second TEG indicated by the UE may be determined through network indication, protocol agreement, or LTE selection. The type of second TEG includes at least one of the following: an Rx TEG and a Tx TEG, an RxTx TEG, and an Rx TEG.

Optionally, when the terminal indicates the association relationship between the downlink positioning measurement result and the second TEG, the method further includes:
indicating, by the terminal, that a timing error of a downlink positioning measurement result is compensated or not compensated.

Optionally, when the LTE instructs to compensate for the timing error of the downlink positioning measurement result, the UE indicates that a relationship between a measurement result and a TEG is none, or the UE indicates only an association relationship between a measurement result and one TEG (the TEG may be a default TEG specified in the protocol or indicated by the network or selected by the UE).

Optionally, the UE indicates a timing error compensation method, for example, internal compensation, or the UE performs calculation and compensation according to different measurement results associated with a plurality of TEGs.

Optionally, the UE indicates compensation confidence.

Optionally, before the indicating, by a terminal, first information to a network side device, the method further includes:
receiving seventh indication signaling sent by the network side device, where the seventh indication signaling is used to indicate a quantity of TEGs that can be associated when the terminal measures a downlink reference signal for positioning or sends an uplink reference signal for positioning.

Optionally, before indicating an association relationship between a measurement result and/or an SRS and a TEG, the LTE receives the indication of the network device, to indicate a quantity of TEGS that can be associated when the UE measures a PRS or send an SRS.

For example, the UE supports four Tx TEGs, but when the network side device instructs the LTE to send an SRS, only two Tx TEGs can be associated (or activated). For example, the UE supports a Tx TEG 0, a Tx TEG 1, a Tx TEG 2, and a Tx TEG 3, and the network side device instructs the UE to associate only two Tx TEGs (for example, the Tx TEG 0 and the Tx TEG 2). When sending the SRS, the LTE can be associated only the two Tx TEGs instead of the supported four Tx TEGs.

Optionally, before the indicating, by a terminal, first information to a network side device, the method further includes:
receiving eighth indication signaling sent by the network side device, where the eighth indication signaling is used to indicate the terminal to calculate and/or report a time difference between second TEGs and/or compensate for an error of a second TEG in a downlink positioning measurement result.

Optionally, before indicating an association relationship between a measurement result and/or an SRS and a TEG, the LTE receives the indication of the network device, to indicate whether the UE can calculate and/or report a time difference (time difference) between Rx TEGs and/or compensate for an error of an Rx TEG in the measurement result.

Optionally, the timing error group indication method further includes:
reporting, by the terminal, terminal capability information to the network side device.

Herein, the network side device may be a location server or a base station, including a serving gNB or a neighboring gNB.

Optionally, the terminal capability information includes one of the following:
calibration capability information;
Rx TEG capability information;
Tx TEG capability information; and
RxTx TEG capability information.

Optionally, the calibration capability information includes at least one of the following that:
the terminal does not support calibration of a receive timing error Rx timing error, a transmit timing error Tx timing error, and a receive-transmit timing error RxTx timing error;
the terminal supports calibration of an Rx timing error;
the terminal supports calibration of a Tx timing error; and
the terminal supports calibration of an RxTx timing error.

The timing error "timing error" may also be replaced with a "panel".

Optionally, the UE does not support calibration of an Rx/Tx timing error of any panel.

Optionally, the UE supports calibration of an RxTx timing delay of a single panel: The UE can calibrate a receive-transmit RTT error (that is, Rx timing error+Tx timing error) of a same panel, or restrict the receive-transmit RTT error of the panel to a range.

If both Rx and Tx are in a panel 1, or both Rx and Tx are in a panel 2, the UE may ensure a same RxTx TEG.

For example, for a combination of a 2Rx panel and a 2Tx panel, only three RxTx TEGs may need to be associated instead of four groups of {Rx TEG, Tx TEG}.

The UE supports Rx calibration of a single panel.

The UE supports Tx calibration of a single panel.

The UE supports Rx calibration of a single panel and Tx calibration of the panel.

Optionally, the LTE supports calibration of an RxTx timing error of a same panel. For example, if a signal is received by using a specified panel and a signal is sent by using the same panel, the UE supports calibration of an RxTx timing error of the same panel.

Optionally, the LTE supports calibration of an RxTx timing error across panels. For example, if a signal is received by using a specified panel and a signal is sent by using another panel, the UE supports calibration of an RxTx timing error across panels.

Optionally, the Rx TEG capability information includes at least one of the following:
a quantity of Rx TEGs supported by the terminal;
a quantity of Rx TEGs that can be activated or has been activated by the terminal; and
a maximum quantity of Rx TEGs associated with one resource of a downlink reference signal for positioning or a positioning measurement result of one resource of a downlink reference signal for positioning at a same moment.

Optionally, a TEG may be replaced with a "panel". A maximum quantity of Rx TEGs that can be associated with one PRS resource at a same moment may be understood as a maximum quantity of Rx panels that can be used for receiving on one PRS resource at a same moment.

Optionally, the Tx TEG capability information includes at least one of the following:
a quantity of Tx TEGs supported by the terminal;
a quantity of Tx TEGs that can be activated or has been activated by the terminal; and
a quantity of Tx TEGs associated with a resource of an uplink reference signal for positioning sent by the terminal.

Optionally, the quantity of Tx TEGs associated with the resource of the uplink reference signal for positioning sent by the terminal may also be expressed as a quantity of Tx TEGs that can be simultaneously associated with the terminal to send the resource of the uplink reference signal for positioning.

The quantity of Tx TEGs that can be simultaneously associated with the terminal to send the resource of the uplink reference signal for positioning, for example, an SRS resource, may be expressed as a quantity of Tx panels that can be simultaneously used by the UE to send the resource of the uplink reference signal for positioning.

Optionally, the RxTx TEG capability information includes at least one of the following:
a quantity of RxTx TEGs supported by the terminal; and
a quantity of RxTx TEGs that can be activated or has been activated by the terminal.

Optionally, when the terminal performs downlink reference signal for positioning measurement, at least one of the following behavior is included:

The LTE does not expect one measurement instance to be associated with a plurality of Rx TEGs. That is, when determining one measurement result (such as an RSTD or an Rx-Tx difference), the UE can perform joint processing on only a measurement result associated with one Rx TEG.

The UE does not expect a PRS resource of one measurement instance to be associated with a plurality of Tx TEGs.

When the UE does not expect PRS repetition, a plurality of Tx TEGs are associated.

One measurement instance includes a plurality of PRS resource set instances. Generally, one measurement instance determines one measurement result (for example, determines one RSTD result). When determining a result, the LTE performs joint processing on measurement results of a plurality of PRS resource set instances (which may be considered as a plurality of PRS periods), for example, performs smoothing/averaging to obtain a better result. However, if one measurement result is determined, and a measurement result of each PRS resource set instance is associated with different Rx TEGs, an error may occur in a last result of joint calculation. Therefore, UE behavior is proposed here, that is, a plurality of PRS resource set instances jointly processed by the UE when determining a measurement result are associated with a same Rx TEG. Similarly, a same Tx TEG needs to be associated.

Optionally, when the terminal sends an uplink reference signal for positioning, a plurality of Tx TEGs are associated when the terminal is not allowed to be SRS repetition.

FIG. 6 is a second schematic flowchart of a timing error group indication method according to an embodiment of this application. The method is applied to a network side device, and the network side device is a base station. As shown in FIG. 6, the method includes the following steps:

Step 600: A base station indicates third information to a location server, where the third information is used to assist the location server in performing positioning calculation.

The third information includes at least one of the following:
a third association relationship, where the third association relationship is used to indicate an association relationship between a downlink reference signal for positioning and a third timing error group (TEG);
a fourth association relationship, where the fourth association relationship is used to indicate an association relationship between an uplink positioning measurement result and a fourth TEG; and
an uplink positioning measurement result.

Optionally, the base station indicates the association relationship between the downlink reference signal for positioning (for example, a PRS) and the third TEG, the association relationship between the uplink positioning measurement result and the fourth TEG, and/or the uplink positioning measurement result to the location server (in a specified TRP), to assist the location server in performing positioning calculation.

The association relationship may be represented by an associated TEG identifier ID, or downlink reference signals for positioning or uplink positioning measurement results of a same TEG are grouped into one group, or may be represented in another manner.

The downlink reference signal for positioning may be a PRS or another signal for downlink positioning.

The uplink positioning measurement result is obtained by the base station by measuring an uplink reference signal for positioning sent by the terminal.

The uplink reference signal for positioning may be an SRS or another signal for uplink positioning.

The uplink positioning measurement result includes but is not limited to at least one of the following: a LTL RTOA (Uplink Relative Time of Arrival, uplink time of arrival), a gNB Rx-Tx time difference measurement result, and another type of uplink measurement result.

In this embodiment of this application, the third TEG includes at least one of the following: a Tx TEG and an RxTx TEG, that is, a TRP Tx TEG and a TRP RxTx TEG.

Optionally, the third TEG is a timing error group in which the base station sends a downlink reference signal for positioning.

The fourth TEG includes at least one of the following: an Rx TEG, an RxTx TEG, and {Rx TEG, Tx TEG}, that is, a TRP Rx TEG, a TRP RxTx TEG, and {TRP Rx TEG, TRP Tx TEG}.

Optionally, the fourth TEG is a timing error group in which the base station receives an uplink reference signal for positioning.

And/or
Step 601: The base station indicates second information to a terminal, where the second information is used to indicate that there is an association relationship between a resource set of a downlink reference signal for positioning and an antenna port of a transmission and receiving point (TRP) and/or between a resource of a downlink reference signal for positioning and the antenna port of the TRP.

For understanding of the second information, refer to the foregoing embodiment. Details are not described herein again.

In this embodiment of this application, third information is indicated to a location server and/or second information is indicated to a terminal, to assist the location server in performing positioning calculation, thereby reducing or eliminating impact of a timing error group on positioning precision and improving positioning precision.

Optionally, the third information includes the uplink positioning measurement result, and before the base station indicates the third information to the location server, the method further includes:
obtaining a first association relationship indicated by the terminal or the location server, where the first association relationship is used to indicate an association relationship between an uplink reference signal for positioning and a first TEG.

Optionally, before reporting the uplink positioning measurement result, a gNB receives an indication from the location server or LTE to indicate the association relationship between the uplink reference signal for positioning and the first TEG.

Optionally, the first association relationship is an association relationship between an SRS and a UE Tx TEG.

In an implementation, a relationship between an SRS and a Tx TEG is determined according to a sequence and/or a mapping manner associated with the SRS and the Tx TEG.

In an implementation, the first association relationship explicitly indicated by the UE is directly received.

In an implementation, the LTE explicitly indicates the first association relationship to the location server, and then the location server sends the first association relationship to the gNB.

Optionally, the method further includes:
indicating, by the base station, fourth information to the location server, where the fourth information includes at least one of the following:
a time difference between first TEGs;
confidence or quality of a time difference between first TEGs;
a method for obtaining a first TEG; and
a TEG identifier associated with a first TEG.

Optionally, when indicating the third information to the location server, the base station further indicates the time difference between the first TEGs to the location server. The first TEG is a timing error group in which the terminal sends an uplink reference signal for positioning.

Further, the base station indicates the confidence or the quality of the time difference between the first TEGs to the location server.

Further, the base station indicates, to the location server, the method for obtaining a first TEG, for example, performs calculation and compensation according to different measurement results associated with a plurality of TEGs.

Optionally, the base station indicates, to the location server, the TEG identifier associated with the first TEG. For example, a reference Tx TEG identifier and another Tx TEG identifier are indicated.

Optionally, the base station gNB calculates a time difference of a specified UE Tx TEG by using the UE Tx TEG as a minus based on a UE Tx TEG identifier.

Optionally, a reference Tx TEG may be specified by a protocol, indicated by the location server, or selected by the gNB.

Optionally, the third information includes the uplink positioning measurement result, and before the base station indicates the third information to the location server, the method further includes:
receiving ninth indication signaling sent by the location server, where the ninth indication signaling is used to instruct the base station to calculate and/or report a time difference between first TEGs and/or compensate for an error of a first TEG in the uplink positioning measurement result.

Optionally, before reporting a measurement result, the gNB receives an indication from the location server to indicate whether the gNB can calculate and/or report a time difference (time difference) between Tx TEGs and/or compensate for an error of a Tx TEG in the measurement result.

Optionally, that the base station indicates third information to a location server includes:
reporting an uplink positioning measurement result in a case that the first association relationship is indicated by using a sequence and/or a mapping manner, where the uplink positioning measurement result includes the first association relationship.

Optionally, in a case that the first association relationship is indicated by using the sequence and/or the mapping manner, when the base station reports the uplink positioning measurement result, the first association relationship is included in the uplink positioning measurement result.

In an implementation, before SRS measurement is performed, the gNB may receive information from the location server or the UE to indicate a quantity of Tx TEGs associated with an SRS (or a quantity of Tx TEGs supported by the UE or associated Tx TEGs). According to the sequence and/or the mapping manner specified by a protocol or indicated by a network, the gNB obtains sequences and/or mapping locations of SRSs associated with different UE Tx TEGs, thereby measuring an SRS in each SRS instance. Then, the gNB reports an SRS measurement result to the location server, where the measurement result includes an association relationship between an SRS and a UE Tx TEG.

Optionally, the method further includes: indicating, by the base station to the location server, an association relationship between an uplink positioning measurement result and a fourth TEG, and/or a difference between timing errors of fourth TEGs, and/or compensating for an uplink positioning measurement result of a timing error of a fourth TEG. Behavior of the base station may be determined through at least one of protocol agreement, indication of the location server, and determining by the base station.

Optionally, the method further includes: when reporting the uplink positioning measurement result to the location server, further reporting, by the base station, identifier information of an uplink reference signal for positioning associated with the uplink positioning measurement result, where
the identifier information of the uplink reference signal for positioning includes at least one of the following:
resource set identifier ID of an uplink reference signal for positioning;
resource ID of an uplink reference signal for positioning;
a serving cell ID or a carrier ID;
a bandwidth part (BWP) ID;
a bandwidth indicator;
a time stamp corresponding to an instance of an uplink reference signal for positioning;
an instance identifier of an uplink reference signal for positioning; and
frequency domain location information of a carrier and/or a BWP on which an uplink reference signal for positioning is located.

Optionally, the method further includes:
receiving, by the base station, terminal capability information sent by the terminal or the location server, where
the terminal capability information includes one of the following:
   calibration capability information;
   Rx TEG capability information;
   Tx TEG capability information; and
   RxTx TEG capability information.

For understanding of the calibration capability information, the Rx TEG capability information, the Tx TEG capability information, and the RxTx TEG capability information, refer to the foregoing embodiment. Details are not described herein again.

In some optional embodiments, the base station may also perform positioning calculation. The base station may directly obtain first information indicated by the terminal, or the terminal may indicate first information to the location server, and the location server sends the first information to the base station.

Optionally, the method further includes:
obtaining first information indicated by a terminal or a location server, where the first information is used to assist the base station in performing positioning calculation; and
the first information includes at least one of the following:
   a first association relationship, where the first association relationship is used to indicate an association relationship between an uplink reference signal for positioning and a first timing error group (TEG); and
   a second association relationship, where the second association relationship is used to indicate an association relationship between a downlink positioning measurement result and a second TEG.

Optionally, before the obtaining first information indicated by a terminal, the method further includes:
sending, by the base station, a first request message to the terminal, where the first request message is used to request the terminal to indicate the first information.

Optionally, the first information includes the first association relationship, and the obtaining first information indicated by a terminal or a location server includes at least one of the following:
obtaining the first association relationship by using a sequence of an uplink reference signal for positioning;
obtaining the first association relationship in a mapping manner of an uplink reference signal for positioning;
obtaining the first association relationship in an event trigger manner;
aperiodically obtaining the first association relationship; and
periodically obtaining the first association relationship.

Optionally, before the obtaining the first association relationship by using a sequence of an uplink reference signal for positioning or in a mapping manner of an uplink reference signal for positioning, the method further includes:
sending, by the base station, first indication signaling to the terminal, where the first indication signaling is used to indicate the terminal to enable a function of indicating the first association relationship by using the sequence of the uplink reference signal for positioning and/or using the mapping manner of the uplink reference signal for positioning.

Optionally, the obtaining the first association relationship in an event trigger manner includes:
receiving TEG indication signaling sent by the terminal, where the TEG indication signaling is used to indicate the first association relationship or indicate that the first association relationship changes.

Optionally, before the receiving TEG indication signaling sent by the terminal, the method further includes:
receiving, by the base station, second indication signaling at least once, where the second indication signaling is used to indicate the first association relationship.

Optionally, the aperiodically obtaining the first association relationship includes:
receiving third indication signaling sent by the terminal, where the third indication signaling is used to indicate an association relationship between an uplink reference signal for positioning in an instance of an uplink reference signal for positioning within a first time window before a first moment t and a first TEG; and
the first time window includes latest P instances of uplink reference signals for positioning before the first moment t, P is a positive integer, and P is obtained in at least one manner of protocol agreement, network indication, and terminal selection.

Optionally, the periodically obtaining the first association relationship includes at least one of the following:
receiving fourth indication signaling sent by the terminal according to a period T and/or a period offset, where the fourth indication signaling is used to indicate an association relationship between uplink reference signals for positioning at adjacent period intervals and a TEG; and
obtaining the first association relationship from a terminal receive-transmit time difference (LTE Rx-Tx time difference) measurement report.

Optionally, the first information includes the second association relationship, and the obtaining first information indicated by a terminal or a location server includes:
in a case that a downlink positioning measurement result received by the base station includes a downlink reference signal time difference (DL-RSTD), a receive-transmit time difference (Rx-Tx time difference), or another type of downlink measurement result, for a target positioning measurement result, obtaining, by the base station, an association relationship between the target positioning measurement result and N second TEGs, where
the target positioning measurement result is a positioning measurement result obtained by the terminal by measuring a resource of a target downlink reference signal for positioning, N is a positive integer greater than or equal to 1, and N is obtained in at least one manner of protocol agreement, network indication, and terminal selection.

Optionally, the obtaining, by the base station, an association relationship between the target positioning measurement result and N second TEGs includes at least one of the following:
obtaining, by the base station, paths that are associated with the N second TEGs and that are indicated by the terminal;
obtaining, by the base station, receive beam indexes that are associated with the N second TEGs and that are indicated by the terminal;
obtaining, by the base station, an indication of the terminal indicating that the N second TEGs are obtained by sweeping a plurality of receive beams or by simultaneously measuring the resource of the target downlink reference signal for positioning;
obtaining, by the base station, time stamps that are of downlink positioning measurement results associated with the N second TEGs and that are indicated by the terminal;
obtaining, by the base station, aa time difference that is between the N second TEGs and that is indicated by the terminal;
obtaining, by the base station, location information that is associated with the N second TEGs in the terminal and that is indicated by the terminal;
obtaining, by the base station, downlink positioning measurement results that are associated with the N second TEGs and that are reported by the terminal; and
obtaining, by the base station, an association relationship that is between the target positioning measurement result and the N second TEGs and that is indicated in downlink positioning measurement results corresponding to different time stamps.

Optionally, the method further includes:
sending, by the base station, fifth indication signaling to the terminal, where the fifth indication signaling is used to indicate the terminal to measure the resource of the target downlink reference signal for positioning through Rx TEG sweeping.

Optionally, the method further includes at least one of the following:
not indicating, by the base station, spatial QCL information of the resource of the target downlink reference signal for positioning; and
indicating, by the base station, the resource of the target downlink reference signal for positioning to be repeated.

Optionally, the instructing the terminal to measure the resource of the downlink reference signal for positioning through Rx TEG sweeping includes at least one of the following:
instructing the terminal to measure the resource of the target downlink reference signal for positioning once through Rx TEG sweeping across M periods, where M is a positive integer, and M is obtained in at least one manner of protocol agreement, network indication, and terminal selection;
instructing the terminal to perform sweeping in partial Rx TEGs or instructing the terminal to perform sweeping across partial Rx TEGs; and
instructing the terminal to report downlink positioning measurement results associated with different Rx TEGs.

Optionally, the instructing the terminal to measure the resource of the target downlink reference signal for positioning once through Rx TEG sweeping across M periods further includes at least one of the following:
indicating a total quantity of Rx TEGs in Rx TEG sweeping; and
indicating a quantity of Rx TEGs in Rx TEG sweeping in each instance of a downlink reference signal for positioning.

Optionally, the method further includes:
sending sixth indication signaling to the terminal in a case that the terminal indicates N second TEGs and/or measurement results of N second TEGs and/or a plurality of receive beam indexes that are associated with a resource of a first downlink reference signal for positioning, where
the sixth indication signaling is used to indicate the terminal to use the resource of the first downlink reference signal for positioning as a reference resource for a resource of a second downlink reference signal for positioning.

Optionally, the first information includes the second association relationship, and the obtaining, by the base station, first information indicated by a terminal includes:
in a case that a downlink positioning measurement result received by the base station includes a terminal receive-transmit time difference (LTE Rx-Tx time difference), performing, by the base station, one of the following:
obtaining an association relationship among the downlink positioning measurement result, an Rx TEG and a Tx TEG;
obtaining an association relationship between the downlink positioning measurement result and an RxTx TEG; and
obtaining an association relationship between the downlink positioning measurement result and an Rx TEG.

Optionally, the method further includes:
receiving, by the base station, information indicated by the terminal that a timing error of a downlink positioning measurement result is compensated or not compensated.

Optionally, the method further includes:
sending seventh indication signaling to the terminal, where the seventh indication signaling is used to indicate a quantity of TEGs that can be associated when the terminal measures a downlink reference signal for positioning or sends an uplink reference signal for positioning.

Optionally, the method further includes:
sending eighth indication signaling to the terminal, where the eighth indication signaling is used to indicate the terminal to calculate and/or report a time difference between second TEGs and/or compensate for an error of a second TEG in a downlink positioning measurement result.

In this embodiment of this application, a base station performs positioning calculation by obtaining an association relationship between an uplink reference signal for positioning and a first TEG and/or an association relationship between a downlink positioning measurement result and a second TEG that are indicated by a terminal, thereby reducing or eliminating impact of a timing error group on positioning precision and improving positioning precision.

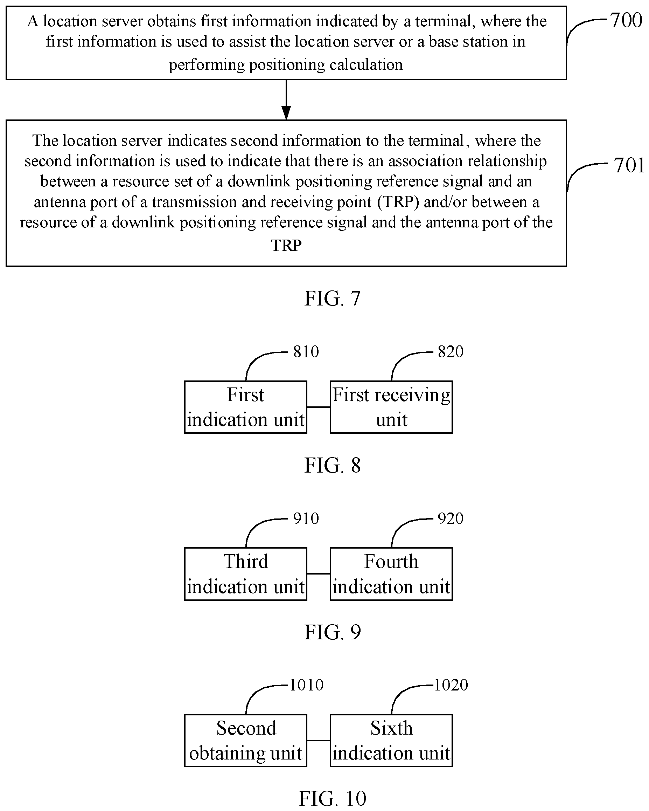

FIG. 7 is a third schematic flowchart of a timing error group indication method according to an embodiment of this application. The method is applied to a network side device, and the network side device is a location server. As shown in FIG. 7, the method includes the following steps:

Step 700: A location server obtains first information indicated by a terminal, where the first information is used to assist the location server or a base station in performing positioning calculation.

The first information includes at least one of the following:
a first association relationship, where the first association relationship is used to indicate an association relationship between an uplink reference signal for positioning and a first timing error group (TEG); and
a second association relationship, where the second association relationship is used to indicate an association relationship between a downlink positioning measurement result and a second TEG.

It should be noted that, to reduce or eliminate impact of an Rx/Tx timing error on positioning precision, in this embodiment of this application, the location server obtains the association relationship between the uplink reference signal for positioning and the first timing error group (TEG) and/or the association relationship between the downlink positioning measurement result and the second TEG that are indicated by the terminal, to assist the location server or the base station in performing positioning calculation.

The first TEG includes at least one of the following: a Tx TEG and an RxTx TEG, that is, a UE Tx TEG and a UE RxTx TEG.

The second TEG includes at least one of the following: an Rx TEG, an RxTx TEG, and {Rx TEG, Tx TEG}, that is, a UE Rx TEG, a UE RxTx TEG, and {UE Rx TEG, UE Tx TEG}.

The association relationship may be represented by an associated TEG identifier ID, or uplink reference signals for positioning or downlink positioning measurement results of a same TEG are grouped into one group, or may be represented in another manner.

The uplink reference signal for positioning may be an SRS or another signal for uplink positioning.

The downlink positioning measurement result is obtained by the terminal by measuring a received downlink reference signal for positioning.

The downlink reference signal for positioning may be a PRS or another signal for downlink positioning.

The downlink positioning measurement result includes at least one of the following: a downlink reference signal time difference (Downlink Reference Signal Time Difference, DL RSTD), a UE receive-transmit time difference (UE Rx-Tx time difference) measurement result, and another type of downlink measurement result.

The another type of downlink measurement result may be (DL-RSRP). This is not specifically limited in this application.

Step 701: The location server indicates second information to the terminal, where the second information is used to indicate that there is an association relationship between a resource set of a downlink reference signal for positioning and an antenna port of a transmission and receiving point (TRP) and/or between a resource of a downlink reference signal for positioning and the antenna port of the TRP.

For understanding of the second information, refer to the foregoing embodiment. Details are not described herein again.

In this embodiment of this application, a network side device obtains an association relationship between an uplink reference signal for positioning and a first timing error group (TEG) and/or an association relationship between a downlink positioning measurement result and a second TEG that are indicated by a terminal, and/or indicates second information to the terminal, to assist in positioning calculation, thereby reducing or eliminating impact of a timing error group on positioning precision and improving positioning precision.

Optionally, before the obtaining, by the location server, first information indicated by a terminal, the method further includes:
sending, by the location server, a first request message to the terminal, where the first request message is used to request the terminal to indicate the first information.

Optionally, for a scenario in which a positioning precision requirement is not high, the network side device may require the terminal not to provide the first information.

The following further describes how the network side device obtains the first information indicated by the terminal.

Optionally, the first information includes the first association relationship, and the obtaining, by the location server, first information indicated by a terminal includes at least one of the following:
obtaining the first association relationship by using a sequence of an uplink reference signal for positioning;
obtaining the first association relationship in a mapping manner of an uplink reference signal for positioning;
obtaining the first association relationship in an event trigger manner;
aperiodically obtaining the first association relationship; and
periodically obtaining the first association relationship.

Optionally, the sequence of the uplink reference signal for positioning is generated according to a cyclic shift corresponding to the first TEG associated with the uplink reference signal for positioning, where different first TEGs correspond to different cyclic shifts. Therefore, the location server may obtain the first association relationship by parsing the sequence of the uplink reference signal for positioning.

Optionally, the association relationship between the uplink reference signal for positioning and the first TEG is represented in the mapping manner of the uplink reference signal for positioning. For example, for a same SRS resource, a Tx TEG changes in different periods, and mapping manners in different periods of the same SRS resource are different.

Optionally, the first association relationship is determined by using a time-frequency location corresponding to the uplink reference signal for positioning, and different first TEGs are distinguished through frequency division multiplexing (Frequency Division Multiplexing, FDM) manner. FDM distinguishes different TEGs and is related to a quantity of Tx TEGs.

Optionally, before the obtaining the first association relationship by using a sequence of an uplink reference signal for positioning or in a mapping manner of an uplink reference signal for positioning, the method further includes:
sending, by the location server, first indication signaling to the terminal, where the first indication signaling is used to indicate the terminal to start or enable a function of indicating the first association relationship by using the sequence of the uplink reference signal for positioning and/or using the mapping manner of the uplink reference signal for positioning.

Optionally, the location server may indicate, to the terminal by using the base station, whether to enable the function of "representing an association relationship between an SRS and a TEG by using the sequence and/or the mapping manner", for example, by using a switch.

In an implementation, when a serving gNB receives a request from a location server, for example, requesting to obtain (in real time) an association relationship between an SRS and a Tx TEG. The serving gNB may instruct the UE to enable the switch. The UE indicates the association relationship between an SRS and a Tx TEG according to the instruction by using a sequence and/or a mapping manner. For example, in a scenario in which the LTE supports/is associated with only one Tx TEG, or a scenario in which a positioning precision requirement is not high, the switch is set to Off or a default indication.

Optionally, the obtaining the first association relationship in an event trigger manner includes:
receiving TEG indication signaling sent by the terminal, where the TEG indication signaling is used to indicate the first association relationship or indicate that the first association relationship changes.

Optionally, content of the TEG indication signaling includes one of the following:
indicating that an association relationship between an uplink reference signal for positioning in a latest instance of an uplink reference signal for positioning and a first TEG before the TEG indication signaling changes, and the TEG indication signaling takes effect until a latest second instance of an uplink reference signal for positioning before next TEG indication signaling; and
indicating that an association relationship between an uplink reference signal for positioning in a latest instance of an uplink reference signal for positioning and a first TEG after the TEG indication signaling changes, and the TEG indication signaling takes effect until a latest instance of an uplink reference signal for positioning before the next TEG indication signaling.

That an association relationship changes means that an association relationship between an uplink reference signal for positioning in this period and a first TEG changes compared with that between an uplink reference signal for positioning in a previous period and a first TEG.

It can be understood that "indicating that an association relationship between an uplink reference signal for positioning in a latest instance of an uplink reference signal for positioning and a first TEG before the TEG indication signaling changes" may be alternatively expressed as "indicating an association relationship between an uplink reference signal for positioning in a latest instance of an uplink reference signal for positioning and a first TEG before the TEG indication signaling".

"Indicating that an association relationship between an uplink reference signal for positioning in a latest instance of an uplink reference signal for positioning and a first TEG after the TEG indication signaling changes" may be alternatively expressed as "indicating an association relationship between an uplink reference signal for positioning in a latest instance of an uplink reference signal for positioning and a first TEG after the TEG indication signaling".

The TEG indication signaling indicates an effective time in addition to an association relationship or a change of an association relationship. An association relationship between an uplink reference signal for positioning and a first TEG keeps unchanged within the effective time.

Taking an SRS an example, a relationship between an uplink reference signal in a instance of a specified uplink reference signal for positioning and a first TEG may be understood as an association relationship between all SRS resources or SRS resource sets and the first TEG, an association relationship between a specified SRS resource or SRS resource set and the first TEG, or an association relationship between several SRS resources or SRS resource sets in this SRS instance and the first TEG.

Optionally, before the receiving TEG indication signaling sent by the terminal, the method further includes:
receiving, by the location server, second indication signaling at least once, where the second indication signaling is used to indicate the first association relationship.

Optionally, before the event trigger indication, the LTE reports an association relationship between an SRS and a Tx TEG at least once, for example, reports an association relationship in an initial SRS sending stage (for example, a first SRS instance), or an association relationship in a specified SRS instance/some SRS instances (network indication/protocol agreement/UE selection). Correspondingly, the location server receives the second indication signaling at least once, where the second indication signaling is used to indicate the first association relationship.

Optionally, the aperiodically obtaining the first association relationship includes:
receiving third indication signaling sent by the terminal, where the third indication signaling is used to indicate an association relationship between an uplink reference signal for positioning in an instance of an uplink reference signal for positioning within a first time window before a first moment t and a first TEG; and
the first time window includes latest P instances of uplink reference signals for positioning before the first moment t, P is a positive integer, and P is obtained in at least one manner of protocol agreement, network indication, and terminal selection.

Optionally, the first moment t is a reporting moment of the UE. The first moment t is indicated by the network side device by using downlink control information DCI signaling and an offset.

The DCI signaling is used to trigger aperiodic sending of an uplink reference signal for positioning.

Optionally, the periodically obtaining the first association relationship includes at least one of the following:
receiving fourth indication signaling sent by the terminal according to a period T and/or a period offset, where the fourth indication signaling is used to indicate an association relationship between uplink reference signals for positioning at adjacent period intervals and a TEG; and
obtaining the first association relationship from a terminal receive-transmit time difference (UE Rx-Tx time difference) measurement report, where
the period T and/or the period offset are/is obtained in at least one manner of protocol agreement, network indication, and terminal selection.

The periodically indicating is generally: the terminal sends an indication according to a network configuration period and/or a period offset; or the terminal may first receive a network preconfiguration period and/or an offset, and then receive an activation indication (for example, MAC CE activation signaling) of the network, and the terminal is activated to send an indication.

Optionally, the period T is related to a sending period of an uplink reference signal for positioning. For example, the period T is Q times of an SRS period, and Q is a positive integer.

Optionally, the period T is related to a period in which the base station gNB reports an uplink positioning measurement result. For example, the period T is Q times of an SRS measurement result period reported by the gNB, and Q is a positive integer.

Optionally, in an RTT positioning method (or Multi-RTT positioning method), the UE periodically indicates the association relationship between the uplink reference signal for positioning and the first TEG, which may be included in the UE Rx-Tx time difference measurement report. Correspondingly, the location server obtains the first association relationship from the terminal receive-transmit time difference (UE Rx-Tx time difference) measurement report.

Optionally, the first information includes the second association relationship, and the obtaining, by the location server, first information indicated by a terminal includes:
in a case that a downlink positioning measurement result received by the location server includes a downlink reference signal time difference (DL-RSTD), a receive-transmit time difference (Rx-Tx time difference), or another type of downlink measurement result, for a target positioning measurement result, obtaining, by the location server, an association relationship that is between the target positioning measurement result and N second TEGs and that is indicated by the terminal, where
the target positioning measurement result is a positioning measurement result obtained by the terminal by measuring a resource of a target downlink reference signal for positioning, N is a positive integer greater than or equal to 1, and N is obtained in at least one manner of protocol agreement, network indication, and terminal selection.

It can be understood that the target positioning measurement result is a downlink positioning measurement result of a resource of a specified downlink reference signal for positioning (for example, a PRS resource).

The location server obtains the target positioning measurement result and the N associated second TEGs indicated by the terminal, where N is a positive integer greater than or equal to 1, and N is obtained in at least one manner of protocol agreement, network indication, and terminal selection.

In this embodiment of this application, the second association relationship is used to indicate the association relationship between the downlink positioning measurement result and the second TEG, where the second TEG may be at least one of an Rx TEG, an RxTx TEG, and {Rx TEG, Tx TEG}.

It can be understood that in some embodiments, the second TEG is an Rx TEG.

Optionally, the downlink positioning measurement result is related to N receive timing error groups Rx TEGs, indicating that the LTE receives a same resource of a downlink reference signal for positioning by using a plurality of Rx panels at a same moment.

Alternatively, a same resource of a downlink reference signal for positioning is repeatedly sent, and a receive panel Rx panel is switched when the UE performs receive beam sweeping Rx beam sweeping.

Optionally, the obtaining, by the location server, an association relationship between the target positioning measurement result and N second TEGs includes at least one of the following:
obtaining, by the location server, paths that are associated with the N second TEGs and that are indicated by the terminal, where
the path may be a first path and/or an additional path. That is, the location server obtains an association relationship with a second TEG indicated by per path or per path-group of the terminal.

Optionally, when N=1, the UE reports a second TEG associated with the first path. In other words, when N=1, the location server obtains an association relationship that is with a second TEG and that is indicated by per PRS resource of the terminal.

The location server obtains receive beam indexes that are associated with the N second TEGs and that are indicated by the terminal.

It can be understood that the location server obtains the receive beam indexes that are respectively associated with the N second TEGs and that are indicated by the terminal, and indicates that a measurement result associated with a specified Rx TEG is also related to an Rx beam index.

Optionally, the Rx beam index herein may not be an absolute Rx beam index, and may be used only to distinguish that measurement results associated with Rx TEGs are obtained through different Rx beam measurements.

Optionally, N Rx TEGs are associated with only one Rx beam or not related to an Rx beam, which is indicated by default.

The location server obtains an indication of the terminal indicating that the N second TEGs are obtained by sweeping a plurality of receive beams or by simultaneously measuring the resource of the target downlink reference signal for positioning; and
the location server obtains time stamps that are of downlink positioning measurement results associated with the N second TEGs and that are indicated by the terminal, where

The time stamp may represent measurement in different periods or measurement at different times in a same period.

The location server obtains a time difference that is between the N second TEGs and that is indicated by the terminal; and
the location server obtains location information that is associated with the N second TEGs in the terminal and that is indicated by the terminal, where
the location information includes at least one of the following: a distance or a distance difference between locations associated with the N Rx TEGs in the terminal, or a difference between panel locations corresponding to the N Rx TEGs.

The location server obtains downlink positioning measurement results that are associated with the N second TEGs and that are reported by the terminal; and
the location server obtains an association relationship that is between the target positioning measurement result and the N second TEGs and that is indicated in downlink positioning measurement results corresponding to different time stamps.

Optionally, the method further includes:
sending, by the location server, fifth indication signaling to the terminal, where the fifth indication signaling is used to indicate the terminal to measure the resource of the target downlink reference signal for positioning through Rx TEG sweeping.

Optionally, the method further includes at least one of the following:
not indicating, by the location server, spatial QCL information of the resource of the target downlink reference signal for positioning; and
indicating, by the location server, the resource of the target downlink reference signal for positioning to be repeated.

Optionally, when the network side device indicates "Rx TEG sweeping", QCL information (for example, QCL-D, that is, a spatial QCL relationship) of the resource of the target downlink reference signal for positioning cannot be simultaneously indicated.

Optionally, when the network side device indicates "Rx TEG sweeping", the resource of the target downlink reference signal for positioning needs to be simultaneously indicated to be repeated. Further, a quantity of repetition times is further required to be greater than a specified threshold.

Optionally, the instructing the terminal to measure the resource of the downlink reference signal for positioning through Rx TEG sweeping includes at least one of the following:
instructing the terminal to measure the resource of the target downlink reference signal for positioning once through Rx TEG sweeping across M periods, where M is a positive integer, and M is obtained in at least one manner of protocol agreement, network indication, and terminal selection.

Optionally, the terminal is instructed to measure the resource of the target downlink reference signal for positioning once through Rx TEG sweeping across different instances of downlink reference signals for positioning (that is, downlink reference signal for positioning periods).

For example, for a same PRS resource (set), one measurement is performed in a plurality of periods, and beam sweeping may be performed in the plurality of periods.

The terminal is instructed to perform sweeping in partial Rx TEGs or the terminal is instructed to perform sweeping across partial Rx TEGs.

That is, the indication "Rx TEG sweeping" may restrict sweeping to only a few Rx TEGs, or indicate which Rx TEG sweeping the UE spans.

The terminal is instructed to report downlink positioning measurement results associated with different Rx TEGs.

That is, the indication "Rx TEG sweeping" further includes an indication instructing the terminal to report downlink positioning measurement results associated with different Rx TEGs.

Optionally, the location server receives a reason why the terminal cannot perform Rx TEG sweeping according to the instruction of the network side device or a reason why the terminal cannot report a downlink positioning measurement result.

Optionally, the instructing the terminal to measure the resource of the target downlink reference signal for positioning once through Rx TEG sweeping across M periods further includes at least one of the following:
indicating a total quantity of Rx TEGs in Rx TEG sweeping; and
indicating a quantity of Rx TEGs in Rx TEG sweeping in each instance of a downlink reference signal for positioning.

A instance of a specified downlink reference signal for positioning is a specified period of a downlink reference signal for positioning.

Optionally, M may be an Rx TEG sweeping factor, and the Rx TEG sweeping factor includes a quantity of instances of downlink reference signals for positioning that can be used or used at most by the terminal to complete Rx TEG sweeping once.

Optionally, the method further includes:
sending sixth indication signaling to the terminal in a case that the terminal indicates N second TEGs and/or measurement results of N second TEGs and/or a plurality of receive beam indexes that are associated with a resource of a first downlink reference signal for positioning, where
the sixth indication signaling is used to indicate the terminal to use the resource of the first downlink reference signal for positioning as a reference resource for a resource of a second downlink reference signal for positioning.

It can be understood that for a specified PRS resource, the UE indicates N Rx TEGs and/or measurement results of N Rx TEGs and/or a plurality of Rx beam indexes that are associated with the PRS resource, and the location server may further indicate that the PRS resource is used as an "Rx TEG reference resource" of another PRS resource. When receiving the indication, the UE receives the another PRS resource in a same receiving manner, that is, receives a PRS resource by using same N Rx TEGs or a plurality of same Rx beams.

Optionally, the first information includes the second association relationship, and the obtaining, by the location server, first information indicated by a terminal includes:
in a case that a downlink positioning measurement result received by the location server includes a terminal receive-transmit time difference (UE Rx-Tx time difference), performing, by the base station, one of the following:
obtaining an association relationship among the downlink positioning measurement result, an Rx TEG and a Tx TEG;
obtaining an association relationship between the downlink positioning measurement result and an RxTx TEG; and
obtaining an association relationship between the downlink positioning measurement result and an Rx TEG.

Optionally, the association relationship between the downlink positioning measurement result and the Rx TEG is an Rx TEG associated when the UE receives the downlink reference signal for positioning.

Optionally, for a specific association relationship between the downlink positioning measurement result and the Rx TEG, refer to the association relationship between the uplink reference signal for positioning and the Tx TEG in the foregoing embodiment, including related information of a downlink reference signal for positioning identifier.

Optionally, the association relationship between the downlink positioning measurement result and the Tx TEG is a Tx TEG associated with an uplink subframe (starting point) corresponding to a transmit time Tx time (TUE-TX measurement) or a Tx TEG associated with a Tx time, or a Tx TEG associated with a reference point corresponding to a Tx time when the UE determines an Rx-Tx time difference value.

In an implementation, in one RxTx TEG, the LTE may indicate at least one group of {PRS resources, SRS resources}, and the at least one group is located in a same RxTx TEG, or shares a same RxTx TEG ID. PRS resources and SRS resources between different groups are not in a same RxTx TEG. PRS resources and Rx-Tx time difference measurement are used to determine an Rx time, and SRS resources and Rx-Tx time difference measurement are used to determine a Tx time.

Optionally, the PRS resources may be indicated by at least one of a TRP ID (dl-PRS-ID in the protocol), a PRS resource set ID, and a PRS resource ID.

Optionally, the SRS resources may be indicated by at least one of an SRS resource set ID, an SRS resource ID, a serving cell identifier serving cell ID or a carrier identifier, a bandwidth part identifier BWP ID, a bandwidth indicator, a time stamp or an SRS instance identifier corresponding to an SRS instance, and frequency domain location information of a carrier or a BWP on which an SRS is located.

The frequency domain location information includes but is not limited to a start location, a bandwidth, an SCS, a point A, and the like of the carrier and/or the BWP. The frequency domain location information may also be replaced with other information that can identify the carrier and/or the BWP on which the SRS is located.

Optionally, the association relationship between the downlink positioning measurement result and which type of second TEG indicated by the UE may be determined through network indication, protocol agreement, or LTE selection. The type of second TEG includes at least one of the following: an Rx TEG and a Tx TEG, an RxTx TEG, and an Rx TEG.

Optionally, the method further includes:
receiving, by the location server, information indicated by the terminal that a timing error of a downlink positioning measurement result is compensated or not compensated.

Optionally, when the LTE instructs to compensate for the timing error of the downlink positioning measurement result, the UE indicates that a relationship between a measurement result and a TEG is none, or the UE indicates only an association relationship between a measurement result and one TEG (the TEG may be a default TEG specified in the protocol or indicated by the network or selected by the UE). Accordingly, the location server receives the related information indicated by the UE.

Optionally, the location server receives a timing error compensation method indicated by the terminal, for example, internal compensation, or the LTE performs calculation and compensation according to different measurement results associated with a plurality of TEGs.

Optionally, the location server receives compensation confidence indicated by the terminal.

Optionally, the method further includes:
sending seventh indication signaling to the terminal, where the seventh indication signaling is used to indicate a quantity of TEGs that can be associated when the terminal measures a downlink reference signal for positioning or sends an uplink reference signal for positioning.

Optionally, before the first association relationship and/or the second association relationship indicated by the UE are/is received, the seventh indication signaling is sent to the terminal, to indicate a quantity of TEGs that can be associated when the LTE measures a PRS or sends an SRS.

For example, the UE supports four Tx TEGs, but when the location server instructs the UE to send an SRS, only two Tx TEGs can be associated (or activated). For example, the UE supports a Tx TEG 0, a Tx TEG 1, a Tx TEG 2, and a Tx TEG 3, and the location server instructs the UE to associate only two Tx TEGs (for example, the Tx TEG 0 and the Tx TEG 2). When sending the SRS, the LTE can be associated only the two Tx TEGs instead of the supported four Tx TEGs.

Optionally, the method further includes:
sending eighth indication signaling to the terminal, where the eighth indication signaling is used to indicate the terminal to calculate and/or report a time difference between second TEGs and/or compensate for an error of a second TEG in a downlink positioning measurement result.

Optionally, before receiving the first association relationship and/or the second association relationship indicated by the LTE, the location server sends the eighth indication signaling to the terminal to indicate whether the UE can calculate and/or report a time difference (time difference) between second TEGs and/or compensate for an error of a second TEG in the measurement result.

Optionally, the method further includes:
receiving terminal capability information, where
the terminal capability information includes one of the following:
   calibration capability information;
   Rx TEG capability information;
   Tx TEG capability information; and
   RxTx TEG capability information.

Optionally, the location server receives the terminal capability information reported by the terminal.

Optionally, the calibration capability information includes at least one of the following that:
the terminal does not support calibration of a receive timing error Rx timing error, a transmit timing error Tx timing error, and a receive-transmit timing error RxTx timing error;
the terminal supports calibration of an Rx timing error;
the terminal supports calibration of a Tx timing error; and
the terminal supports calibration of an RxTx timing error.

The timing error "timing error" may also be replaced with a "panel".

Optionally, the UE does not support calibration of an Rx/Tx timing error of any panel.

Optionally, the UE supports calibration of an RxTx timing delay of a single panel: The UE can calibrate a receive-transmit RTT error of a same panel, or restrict the receive-transmit RTT error of the panel to a range.

If both Rx and Tx are in a panel 1, or both Rx and Tx are in a panel 2, the UE may ensure a same RxTx TEG.

For example, for a combination of a 2Rx panel and a 2Tx panel, only three RxTx TEGs may need to be associated instead of four groups of {Rx TEG, Tx TEG}.

The UE supports Rx calibration of a single panel.

The UE supports Tx calibration of a single panel.

The UE supports Rx calibration of a single panel and Tx calibration of the panel.

Optionally, the LTE supports calibration of an RxTx timing error of a same panel. For example, if a signal is received by using a specified panel and a signal is sent by using the same panel, the UE supports calibration of an RxTx timing error of the same panel.

Optionally, the LTE supports calibration of an RxTx timing error across panels. For example, if a signal is received by using a specified panel and a signal is sent by using another panel, the UE supports calibration of an RxTx timing error across panels.

Optionally, the Rx TEG capability information includes at least one of the following:
a quantity of Rx TEGs supported by the terminal;
a quantity of Rx TEGs that can be activated or has been activated by the terminal; and
a maximum quantity of Rx TEGs associated with one resource of a downlink reference signal for positioning or a positioning measurement result of one resource of a downlink reference signal for positioning at a same moment.

Optionally, a TEG may be replaced with a "panel". A maximum quantity of Rx TEGs that can be associated with one PRS resource at a same moment may be understood as a maximum quantity of Rx panels that can be used for receiving on one PRS resource at a same moment.

Optionally, the Tx TEG capability information includes at least one of the following:
a quantity of Tx TEGs supported by the terminal;a quantity of Tx TEGs that can be activated or has been activated by the terminal; anda quantity of Tx TEGs associated with a resource of an uplink reference signal for positioning sent by the terminal.

Optionally, the quantity of Tx TEGs associated with the resource of the uplink reference signal for positioning sent by the terminal may also be expressed as a quantity of Tx TEGs that can be simultaneously associated with the terminal to send the resource of the uplink reference signal for positioning.

The quantity of Tx TEGs that can be simultaneously associated with the terminal to send the resource of the uplink reference signal for positioning, for example, an SRS resource, may be expressed as a quantity of Tx panels that can be simultaneously used by the UE to send the resource of the uplink reference signal for positioning.

Optionally, the RxTx TEG capability information includes at least one of the following:
a quantity of RxTx TEGs supported by the terminal; and
a quantity of RxTx TEGs that can be activated or has been activated by the terminal.

Optionally, the method further includes:
obtaining third information indicated by the base station, where the third information is used to assist the location server in performing positioning calculation; and
the third information includes at least one of the following:
   a third association relationship, where the third association relationship is used to indicate an association relationship between a downlink reference signal for positioning and a third timing error group (TEG);
   a fourth association relationship, where the fourth association relationship is used to indicate an association relationship between an uplink positioning measurement result and a fourth TEG; and
   an uplink positioning measurement result.

Optionally, the location server receives the association relationship between the downlink reference signal for positioning (for example, a PRS) and the third TEG, the association relationship between the uplink positioning measurement result and the fourth TEG, and/or the uplink positioning measurement result that are indicated by the base station (in a specified TRP), to perform positioning calculation.

The association relationship may be represented by an associated TEG identifier ID, or downlink reference signals for positioning or uplink positioning measurement results of a same TEG are grouped into one group, or may be represented in another manner.

The downlink reference signal for positioning may be a PRS or another signal for downlink positioning.

The uplink positioning measurement result is obtained by the base station by measuring an uplink reference signal for positioning sent by the terminal.

The uplink reference signal for positioning may be an SRS or another signal for uplink positioning.

The uplink positioning measurement result includes but is not limited to at least one of the following: a UL RTOA, a gNB Rx-Tx time difference measurement result, and another type of uplink measurement result.

In this embodiment of this application, the third TEG includes at least one of the following: a Tx TEG and an RxTx TEG, that is, a TRP Tx TEG and a TRP RxTx TEG.

Optionally, the third TEG is a timing error group in which the base station sends a downlink reference signal for positioning.

The fourth TEG includes at least one of the following: an Rx TEG, an RxTx TEG, and {Rx TEG, Tx TEG}, that is, a TRP Rx TEG, a TRP RxTx TEG, and {TRP Rx TEG, TRP Tx TEG}.

Optionally, the fourth TEG is a timing error group in which the base station receives an uplink reference signal for positioning.

Optionally, the method further includes:
indicating the first association relationship to the base station.

Optionally, the first association relationship is used to indicate the association relationship between the uplink reference signal for positioning and the first TEG.

Optionally, the method further includes:
obtaining fourth information indicated by the base station, where
the fourth information includes at least one of the following:
   a time difference between first TEGs;
   confidence or quality of a time difference between first TEGs;
   a method for obtaining a first TEG; and
   a TEG identifier associated with a first TEG.

When indicating the third information to the location server, the base station further indicates the time difference between the first TEGs to the location server. The first TEG is a timing error group in which the terminal sends an uplink reference signal for positioning.

Further, the base station indicates the confidence or the quality of the time difference between the first TEGs to the location server.

Further, the base station indicates, to the location server, the method for obtaining a first TEG, for example, performs calculation and compensation according to different measurement results associated with a plurality of TEGs.

Optionally, the base station indicates, to the location server, the TEG identifier associated with the first TEG. For example, a reference Tx TEG identifier and another Tx TEG identifier are indicated.

Optionally, the base station gNB calculates a time difference of a specified UE Tx TEG by using the UE Tx TEG as a minus based on a UE Tx TEG identifier.

Optionally, a reference Tx TEG may be specified by a protocol, indicated by the location server, or selected by the gNB.

Optionally, the method further includes:
sending ninth indication signaling to the base station, where the ninth indication signaling is used to instruct the base station to calculate and/or report a time difference between first TEGs and/or compensate for an error of a first TEG in an uplink positioning measurement result.

Optionally, before the gNB reports the measurement result, the location server sends an indication to the base station to indicate whether the gNB can calculate and/or report a time difference (time difference) between Tx TEGs and/or compensate for an error of a Tx TEG in the measurement result.

Optionally, the obtaining third information indicated by a base station includes:
receiving an uplink positioning measurement result reported by the base station, where the uplink positioning measurement result includes the first association relationship.

Optionally, in a case that the first association relationship is indicated by using the sequence and/or the mapping manner, when the base station reports the uplink positioning measurement result, the first association relationship is included in the uplink positioning measurement result. Correspondingly, the location server receives the uplink positioning measurement result including the first association relationship.

Optionally, the obtaining third information indicated by the base station further includes:
obtaining identifier information of an uplink reference signal for positioning associated with the uplink positioning measurement result, where
the identifier information of the uplink reference signal for positioning includes at least one of the following:
   resource set identifier ID of an uplink reference signal for positioning;
   resource ID of an uplink reference signal for positioning;
   a serving cell ID or a carrier ID;
   a bandwidth part (BWP) ID;
   a bandwidth indicator;
   a time stamp corresponding to an instance of an uplink reference signal for positioning;
   an instance identifier of an uplink reference signal for positioning; and
   frequency domain location information of a carrier and/or a BWP on which an uplink reference signal for positioning is located.

Optionally, the method further includes at least one of the following:
obtaining terminal capability information; and
sending the terminal capability information to the base station, where
the terminal capability information includes one of the following:
   calibration capability information;
   Rx TEG capability information;
   Tx TEG capability information; and
   RxTx TEG capability information.

Optionally, when the base station performs positioning calculation, the terminal capability information is sent to the base station.

For understanding of the calibration capability information, the Rx TEG capability information, the Tx TEG capability information, and the RxTx TEG capability information, refer to the foregoing embodiment. Details are not described herein again.

The foregoing embodiments mainly provide the association relationship between the uplink reference signal for positioning and the first TEG, the association relationship between the downlink positioning measurement result and the second TEG, the association relationship between the downlink reference signal for positioning and the third TEG, and the association relationship between the uplink positioning measurement result and the fourth TEG, but it does not explain how the network side device eliminates a TEG error by using the foregoing relationships. Therefore, this application further provides several specific implementations of eliminating a TEG error by using the foregoing relationships.

### Implementation 1

In DL-TDOA positioning, the UE reports an association relationship between PRS measurement and an Rx TEG to the location server (for example, an LMF). It is assumed that the UE has two Rx TEGs (an Rx TEG 0 and an Rx TEG 1). Steps are as follows:
(1) In DL-TDOA positioning, a plurality of TRPs send PRSs and the UE receive the PRSs. To calculate an RSTD (a reference signal time difference) value between different TRPs, a specified TRP is used as a reference. A difference between measurement results of PRSs between another TRP and the reference TRP is calculated, and a measurement result of a specified TRP may be understood as a result obtained after the UE measures a PRS resource in the specified TRP. For the reference TRP, if the UE measures that a PRS resource of the reference TRP is related to the Rx TEG 0 and the UE measures that a PRS resource of a TRP A is related to the Rx TEG 1, an error of a difference between the Rx TEG 0 and the Rx TEG 1 is introduced when an RSTD of the TRP A relative to the reference TRP is calculated.
(2) The UE reports a measurement result of the Rx TEG 0 and a measurement result of the Rx TEG 1 on a specified PRS resource in the TRP 1. Then, the LMF calculates a difference between the measurement result of the Rx TEG 0 and the measurement result of the Rx TEG 1, that is, obtains a difference between the Rx TEG 0 and the Rx TEG 1.
(3) The obtained difference between the Rx TEG 0 and the Rx TEG 1may be used to compensate for the RSTD result in (1), to eliminate this error.

### Implementation 2

In UL-TDOA positioning, the UE reports an association relationship between an SRS and a Tx TEG to the location server (for example, an LMF). It is assumed that the UE has two Tx TEGs (a Tx TEG 0 and a Tx TEG 1). Steps are as follows:
(1) In UL-TDOA positioning, the UE sends SRSs and a plurality of TRPs receive the SRSs. The principle is similar to that of the DL-TDOA. To calculate an RTOA (receiving time of arrival) difference between different TRPs, a specified TRP is used as a reference. A difference between measurement results of SRSs between another TRP and the reference TRP is calculated, and a measurement result of a specified TRP may be understood as a result obtained after the UE measures a specified SRS resource. For the reference TRP, if a measured SRS resource of the reference TRP is related to the UE Tx TEG 0 and a measurement result of an SRS resource measured by a TRP A is related to the UE Tx TEG 1, an error of a difference between the UE Tx TEG 0 and the UE Tx TEG 1 is introduced when an RTOA difference of the TRP A relative to the reference TRP is calculated.
(2) The UE may indicate an association relationship between an SRS and a UE Tx TEG in a plurality of manners. If specified gNB may obtain RTOA values of two SRS resources through measurement, and each SRS resource is associated with two Tx TEGs, the gNB may calculate and obtain a difference between the UE Tx TEG 0 and the UE Tx TEG 1, and report the difference to the location server.
(3) After obtaining the difference between the UE Tx TEG 0 and the UE Tx TEG 1, the location server may compensate for the error between the UE Tx TEG 0 and the UE Tx TEG 1 introduced in the RTOA difference in (1).

It should be noted that, the timing error group indication method provided in the embodiments of this application may be performed by a timing error group indication method apparatus, or a control module that is in the timing error group indication apparatus and that is configured to perform the timing error group indication method. In the embodiments of this application, an example in which the timing error group indication apparatus performs the timing error group indication method is used to describe the timing error group indication apparatus provided in the embodiments of this application.

FIG. 8 is a first schematic structural diagram of a timing error group indication apparatus according to an embodiment of this application. As shown in FIG. 8, the apparatus includes:
a first indication unit 810, configured to indicate first information to a network side device, where the first information is used to assist the network side device in performing positioning calculation; and
the first information includes at least one of the following:
   a first association relationship, where the first association relationship is used to indicate an association relationship between an uplink reference signal for positioning and a first timing error group (TEG); and
   a second association relationship, where the second association relationship is used to indicate an association relationship between a downlink positioning measurement result and a second TEG;
      and/or
   a first receiving unit 820, configured to receive second information sent by the network side device, where the second information is used to assist a terminal and/or the network side device in performing positioning calculation; and
   the second information is used to indicate that there is an association relationship between a resource set of a downlink reference signal for positioning and an antenna port of a transmission and receiving point (TRP) and/or between a resource of a downlink reference signal for positioning and the antenna port of the TRP.

Optionally, the apparatus further includes:
a second receiving unit, configured to receive a first request message sent by the network side device, where the first request message is used to request the terminal to indicate the first information.

Optionally, the first information includes the first association relationship, and the first indication unit is configured to perform at least one of the following:
indicating the first association relationship by using a sequence of an uplink reference signal for positioning;
indicating the first association relationship in a mapping manner of an uplink reference signal for positioning;
indicating the first association relationship in an event trigger manner;
aperiodically indicating the first association relationship; and
periodically indicating the first association relationship.

Optionally, the sequence of the uplink reference signal for positioning is generated according to a cyclic shift corresponding to the first TEG associated with the uplink reference signal for positioning, and different first TEGs correspond to different cyclic shifts.

Optionally, the mapping manner of the uplink reference signal for positioning is determined according to a time-frequency location corresponding to the first TEG associated with the uplink reference signal for positioning, and different first TEGs are distinguished through frequency division multiplexing.

Optionally, the apparatus further includes:
a third receiving unit, configured to receive first indication signaling sent by the network side device, where the first indication signaling is used to indicate the terminal to enable a function of indicating the first association relationship by using the sequence of the uplink reference signal for positioning and/or using the mapping manner of the uplink reference signal for positioning; and
the terminal enables the function of indicating the first association relationship by using the sequence of the uplink reference signal for positioning and/or using the mapping manner of the uplink reference signal for positioning.

Optionally, the indicating the first association relationship in an event trigger manner includes:
in a case that the first TEG associated with the uplink reference signal for positioning changes in a process of transmitting the uplink reference signal for positioning, triggering the terminal to send TEG indication signaling, where
the TEG indication signaling is used to indicate the first association relationship or indicate that the first association relationship changes.

Optionally, content of the TEG indication signaling includes one of the following:
indicating that an association relationship between an uplink reference signal for positioning in a latest instance of an uplink reference signal for positioning and a first TEG before the TEG indication signaling changes, and the TEG indication signaling takes effect until a latest second instance of an uplink reference signal for positioning before next TEG indication signaling; and
indicating that an association relationship between an uplink reference signal for positioning in a latest instance of an uplink reference signal for positioning and a first TEG after the TEG indication signaling changes, and the TEG indication signaling takes effect until a latest instance of an uplink reference signal for positioning before the next TEG indication signaling.

Optionally, the apparatus further includes:
a first sending unit, configured to send second indication signaling at least once, where the second indication signaling is used to indicate the first association relationship.

Optionally, the aperiodically indicating the first association relationship includes:
sending third indication signaling at a first moment t, where the third indication signaling is used to indicate an association relationship between an uplink reference signal for positioning in an instance of an uplink reference signal for positioning within a first time window before the first moment t and a first TEG; and
the first time window includes latest P instances of uplink reference signals for positioning before the first moment t, P is a positive integer, and P is obtained in at least one manner of protocol agreement, network indication, and terminal selection.

Optionally, the periodically indicating the first association relationship includes:
sending fourth indication signaling according to a period T and/or a period offset, where the fourth indication signaling is used to indicate an association relationship between uplink reference signals for positioning at adjacent period intervals and a first TEG.

Optionally, the period T and/or the period offset are/is related to a sending period of an uplink reference signal for positioning or a sending period of an uplink reference signal for positioning measurement result.

Optionally, the periodically indicating the first association relationship includes:
indicating the first association relationship in a terminal receive-transmit time difference (LTE Rx-Tx time difference) measurement report.

Optionally, the first association relationship includes identifier information of an uplink reference signal for positioning; and
the identifier information of the uplink reference signal for positioning includes at least one of the following:
resource set identifier ID of an uplink reference signal for positioning;
resource ID of an uplink reference signal for positioning;
a serving cell ID or a carrier ID;
a bandwidth part (BWP) ID;
a bandwidth indicator;
a time stamp corresponding to an instance of an uplink reference signal for positioning;
an instance identifier of an uplink reference signal for positioning; and
frequency domain location information of a carrier and/or a BWP on which an uplink reference signal for positioning is located.

Optionally, the first information includes the second association relationship, and the first indication unit is configured to:
in a case that a downlink positioning measurement result includes a downlink reference signal time difference (DL-RSTD), a receive-transmit time difference (Rx-Tx time difference), or another type of downlink measurement result, for a target positioning measurement result, indicate an association relationship between the target positioning measurement result and N second TEGs, where
the target positioning measurement result is a positioning measurement result obtained by the terminal by measuring a resource of a target downlink reference signal for positioning, N is a positive integer greater than or equal to 1, and N is obtained in at least one manner of protocol agreement, network indication, and terminal selection.

Optionally, the indicating an association relationship between the target positioning measurement result and N second TEGs includes at least one of the following:
indicating, by the terminal, paths associated with the N second TEGs;
indicating, by the terminal, receive beam indexes associated with the N second TEGs;
indicating, by the terminal, that the N second TEGs are obtained by sweeping a plurality of receive beams or by simultaneously measuring the resource of the target downlink reference signal for positioning;
indicating, by the terminal, time stamps of downlink positioning measurement results associated with the N second TEGs;
indicating, by the terminal, a time difference between the N second TEGs;
indicating, by the terminal, location information associated with the N second TEGs in the terminal;
reporting, by the terminal, downlink positioning measurement results associated with the N second TEGs; and
indicating an association relationship between the target positioning measurement result and the N second TEGs in downlink positioning measurement results corresponding to different time stamps.

Optionally, the indicating an association relationship between the target positioning measurement result and N second TEGs includes:
in a case that a first preset condition is met, reporting an association relationship between the target positioning measurement result and a plurality of second TEGs, where
the first preset condition includes at least one of the following that:
   quality of downlink positioning measurement results associated with the plurality of second TEGs exceeds a first preset threshold;
   the downlink positioning measurement results associated with the plurality of second TEGs are line of sight (LOS) measurement results, or an LOS probability of a downlink positioning measurement result is greater than a second preset threshold; and
   when the terminal performs receive beam sweeping, different receive beams are associated with different second TEGs, and quality of downlink positioning measurement results corresponding to a plurality of receive beams exceeds a third preset threshold.

Optionally, the indicating an association relationship between the target positioning measurement result and N second TEGs includes:
in a case that the terminal is configured with a quasi co-location (QCL) relationship of the resource of the target downlink reference signal for positioning, indicating an association relationship between the target positioning measurement result and one second TEG.

Optionally, the apparatus further includes:
a fourth receiving unit, configured to receive fifth indication signaling sent by the network side device, where the fifth indication signaling is used to indicate the terminal to measure the resource of the target downlink reference signal for positioning through Rx TEG sweeping.

Optionally, that the terminal measures the resource of the target downlink reference signal for positioning through Rx TEG sweeping needs to meet at least one of the following that:
the network side device does not indicate spatial QCL information of the resource of the target downlink reference signal for positioning; and
the network side device indicates the resource of the target downlink reference signal for positioning to be repeated.

Optionally, the instructing the terminal to measure the resource of the target downlink reference signal for positioning through Rx TEG sweeping includes at least one of the following:
instructing the terminal to measure the resource of the target downlink reference signal for positioning once through Rx TEG sweeping across M periods, where M is a positive integer, and M is obtained in at least one manner of protocol agreement, network indication, and terminal selection;
instructing the terminal to perform sweeping in partial Rx TEGs or instructing the terminal to perform sweeping across partial Rx TEGs; and
instructing the terminal to report downlink positioning measurement results associated with different Rx TEGs.

Optionally, the instructing the terminal to measure the resource of the target downlink reference signal for positioning once through Rx TEG sweeping across M periods further includes at least one of the following:
indicating a total quantity of Rx TEGs in Rx TEG sweeping; and
indicating a quantity of Rx TEGs in Rx TEG sweeping in each instance of a downlink reference signal for positioning.

Optionally, the apparatus further includes:
a second sending unit, configured to send a reason why Rx TEG sweeping cannot be performed according to the instruction of the network side device or a reason why the terminal cannot report a downlink positioning measurement result.

Optionally, the apparatus further includes:
a fifth receiving unit, configured to: in a case that the terminal indicates N second TEGs and/or measurement results of N second TEGs and/or a plurality of receive beam indexes that are associated with a resource of a first downlink reference signal for positioning, receive sixth indication signaling sent by the network side device, where the sixth indication signaling is used to indicate the terminal to use the resource of the first downlink reference signal for positioning as a reference resource for a resource of a second downlink reference signal for positioning; and
a sixth receiving unit, configured to receive the resource of the second downlink reference signal for positioning by using the N second TEGs or the plurality of receive beam indexes that are associated with the resource of a first downlink reference signal for positioning.

Optionally, the first information includes the second association relationship, and the first indication unit is configured to:
in a case that a downlink positioning measurement result includes a terminal receive-transmit time difference (UE Rx-Tx time difference), performing, by the terminal, one of the following:
indicating an association relationship among the downlink positioning measurement result, an Rx TEG and a Tx TEG;
indicating an association relationship between the downlink positioning measurement result and an RxTx TEG; and
indicating an association relationship between the downlink positioning measurement result and an Rx TEG.

Optionally, the apparatus further includes:
a first indication unit, configured to indicate that a timing error of a downlink positioning measurement result is compensated or not compensated.

Optionally, the apparatus further includes:
a seventh receiving unit, configured to receive seventh indication signaling sent by the network side device, where the seventh indication signaling is used to indicate a quantity of TEGs that can be associated when the terminal measures a downlink reference signal for positioning or sends an uplink reference signal for positioning. Optionally, the apparatus further includes:
an eighth receiving unit, configured to receive eighth indication signaling sent by the network side device, where the eighth indication signaling is used to indicate the terminal to calculate and/or report a time difference between second TEGs and/or compensate for an error of a second TEG in a downlink positioning measurement result.

Optionally, the apparatus further includes:
a third sending unit, configured to report terminal capability information to the network side device, where
the terminal capability information includes one of the following:
   calibration capability information;
   Rx TEG capability information;
   Tx TEG capability information; and
   RxTx TEG capability information.

Optionally, the calibration capability information includes at least one of the following that:
the terminal does not support calibration of a receive timing error Rx timing error, a transmit timing error Tx timing error, and a receive-transmit timing error RxTx timing error;
the terminal supports calibration of an Rx timing error;
the terminal supports calibration of a Tx timing error; and
the terminal supports calibration of an RxTx timing error.

Optionally, the Rx TEG capability information includes at least one of the following:
a quantity of Rx TEGs supported by the terminal;
a quantity of Rx TEGs that can be activated or has been activated by the terminal; and
a maximum quantity of Rx TEGs associated with one resource of a downlink reference signal for positioning or a positioning measurement result of one resource of a downlink reference signal for positioning at a same moment.

Optionally, the Tx TEG capability information includes at least one of the following:
a quantity of Tx TEGs supported by the terminal;
a quantity of Tx TEGs that can be activated or has been activated by the terminal; and
a quantity of Tx TEGs associated with a resource of an uplink reference signal for positioning sent by the terminal.

Optionally, the RxTx TEG capability information includes at least one of the following:
a quantity of RxTx TEGs supported by the terminal; and
a quantity of RxTx TEGs that can be activated or has been activated by the terminal.

Optionally, the apparatus further includes a first determining unit, configured to:
determine that there is an association relationship between a plurality of resource sets of downlink reference signals for positioning of a TRP and a plurality of antenna ports in a TRP;
determine that there is an association relationship between a plurality of resources of downlink reference signals for positioning in a resource set of a downlink reference signal for positioning and a plurality of antenna ports in a TRP; and
determine that there is an association relationship between a plurality of repeated resources of downlink reference signals for positioning corresponding to a same resource identifier of a downlink reference signal for positioning and a plurality of antenna ports in a TRP.

Optionally, that there is an association relationship between a plurality of resource sets of downlink reference signals for positioning and a plurality of antenna ports in a TRP includes one of the following that:
different resource sets of downlink reference signals for positioning are associated with different groups of antenna ports in a TRP; and
at least one resource set of a downlink reference signal for positioning is associated with one group of antenna ports in a TRP, where
one group of antenna ports in a TRP include at least one TRP antenna port.

Optionally, that there is an association relationship between a plurality of resources of downlink reference signals for positioning in a resource set of a downlink reference signal for positioning and a plurality of antenna ports in a TRP includes one of the following that:
different resources of downlink reference signals for positioning in the resource set of the downlink reference signal for positioning are associated with different antenna ports in a TRP; and
at least one resource of a downlink reference signal for positioning in the resource set of the downlink reference signal for positioning is associated with a same antenna port of TRP, where
one resource of a downlink reference signal for positioning is associated with one or more antenna ports in a TRP.

Optionally, that there is an association relationship between a plurality of repeated resources of downlink reference signals for positioning corresponding to a same resource identifier of a downlink reference signal for positioning and a plurality of antenna ports in a TRP includes one of the following that:
different repeated resources of downlink reference signals for positioning are associated with different antenna ports in a TRP; and
at least one repeated resource of a downlink reference signal for positioning is associated with a same antenna port of TRP.

Optionally, the resource set of the downlink reference signal for positioning, and/or the resource of a downlink reference signal for positioning, and/or resource for repetition of the downlink reference signal for positioning needs to be associated with all antenna ports in a TRP.

Optionally, the second information further includes a function indication for the resource set of the downlink reference signal for positioning and/or the resource of the downlink reference signal for positioning.

Optionally, the apparatus further includes:
a first processing unit, configured to: measure channels of different ports, and perform a codebook traversal process to obtain a best codebook and/or a best angle of departure AOD matching a channel.

Optionally, the second information further includes at least one of the following:
an association relationship between a resource set of a downlink reference signal for positioning and a TRP antenna port;
an association relationship between a resource of a downlink reference signal for positioning and a TRP antenna port; and
an association relationship between a repeated resource of a downlink reference signal for positioning and a TRP antenna port.

In this embodiment of this application, first information is indicated to a network side device and/or second information is received, to assist the network side device in performing positioning calculation, thereby reducing or eliminating impact of a timing error group on positioning precision and improving positioning precision.

The timing error group indication apparatus in this embodiment of this application may be an apparatus, an apparatus or an electronic device with an operating system, or may be a component, an integrated circuit, or a chip in a terminal. The apparatus or the electronic device may be a mobile terminal, or a non-mobile terminal. For example, the mobile device may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The timing error group indication apparatus provided in this embodiment of this application can implement the processes implemented in the method embodiments in FIG. 2 to FIG. 5, and achieve a same technical effect. To avoid repetition, details are not described herein again.

FIG. 9 is a second schematic structural diagram of a timing error group indication apparatus according to an embodiment of this application. As shown in FIG. 9, the apparatus includes:
a third indication unit 910, configured to indicate third information to a location server, where the third information is used to assist the location server in performing positioning calculation; and
the third information includes at least one of the following:
   a third association relationship, where the third association relationship is used to indicate an association relationship between a downlink reference signal for positioning and a third timing error group (TEG);
   a fourth association relationship, where the fourth association relationship is used to indicate an association relationship between an uplink positioning measurement result and a fourth TEG; and
   an uplink positioning measurement result;
      and/or
   a fourth indication unit 920, configured to indicate second information to a terminal, where the second information is used to indicate that there is an association relationship between a resource set of a downlink reference signal for positioning and an antenna port of a transmission and receiving point (TRP) and/or between a resource of a downlink reference signal for positioning and the antenna port of the TRP.

Optionally, the apparatus further includes:
a first obtaining unit, configured to obtain a first association relationship indicated by the terminal or the location server, where the first association relationship is used to indicate an association relationship between an uplink reference signal for positioning and a first TEG.

Optionally, the apparatus further includes:
a fifth indication unit, configured to indicate fourth information to the location server, where
the fourth information includes at least one of the following:
   a time difference between first TEGs;
   confidence or quality of a time difference between first TEGs;
   a method for obtaining a first TEG; and
   a TEG identifier associated with a first TEG.

Optionally, the apparatus further includes:
a ninth receiving unit, configured to receive ninth indication signaling sent by the location server, where the ninth indication signaling is used to instruct the base station to calculate and/or report a time difference between first TEGs and/or compensate for an error of a first TEG in the uplink positioning measurement result and/or report an association relationship between the uplink positioning measurement result and the first TEG.

Optionally, the third indication unit is configured to:
report an uplink positioning measurement result in a case that the first association relationship is indicated by using a sequence and/or a mapping manner, where the uplink positioning measurement result includes the first association relationship.

Optionally, the apparatus further includes:
a fourth sending unit, configured to report, to the location server, identifier information of an uplink reference signal for positioning associated with the uplink positioning measurement result, where
the identifier information of the uplink reference signal for positioning includes at least one of the following:
   resource set identifier ID of an uplink reference signal for positioning;
   resource ID of an uplink reference signal for positioning;
   a serving cell ID or a carrier ID;
   a bandwidth part (BWP) ID;
   a bandwidth indicator;
   a time stamp corresponding to an instance of an uplink reference signal for positioning;
   an instance identifier of an uplink reference signal for positioning; and
   frequency domain location information of a carrier and/or a BWP on which an uplink reference signal for positioning is located.

Optionally, the apparatus further includes:
a tenth receiving unit, configured to receive terminal capability information sent by the terminal or the location server, where
the terminal capability information includes one of the following:
   calibration capability information;
   Rx TEG capability information;
   Tx TEG capability information; and
   RxTx TEG capability information.

In this embodiment of this application, third information is indicated to a location server and/or second information is indicated to a terminal, to assist the location server in performing positioning calculation, thereby reducing or eliminating impact of a timing error group on positioning precision and improving positioning precision.

FIG. 10 is a third schematic structural diagram of a timing error group indication apparatus according to an embodiment of this application. As shown in FIG. 10, the apparatus includes:
a second obtaining unit 1010, configured to obtain first information indicated by a terminal, where the first information is used to assist a location server or a base station in performing positioning calculation; and
the first information includes at least one of the following:
   a first association relationship, where the first association relationship is used to indicate an association relationship between an uplink reference signal for positioning and a first timing error group (TEG); and
   a second association relationship, where the second association relationship is used to indicate an association relationship between a downlink positioning measurement result and a second TEG;
      and/or
   a sixth indication unit 1020, configured to indicate second information to the terminal, where the second information is used to indicate that there is an association relationship between a resource set of a downlink reference signal for positioning and an antenna port of a transmission and receiving point (TRP) and/or between a resource of a downlink reference signal for positioning and the antenna port of the TRP.

Optionally, the apparatus further includes:
a fifth sending unit, configured to send a first request message to the terminal, where the first request message is used to request the terminal to indicate the first information.

Optionally, the first information includes the first association relationship, and the second obtaining unit is configured to perform at least one of the following:
obtaining the first association relationship by using a sequence of an uplink reference signal for positioning;
obtaining the first association relationship in a mapping manner of an uplink reference signal for positioning;
obtaining the first association relationship in an event trigger manner;
aperiodically obtaining the first association relationship; and
periodically obtaining the first association relationship.

Optionally, the apparatus further includes:
a sixth sending unit, configured to send first indication signaling to the terminal, where the first indication signaling is used to indicate the terminal to enable a function of indicating the first association relationship by using the sequence of the uplink reference signal for positioning and/or using the mapping manner of the uplink reference signal for positioning.

Optionally, the obtaining the first association relationship in an event trigger manner includes:
receiving TEG indication signaling sent by the terminal, where the TEG indication signaling is used to indicate the first association relationship or indicate that the first association relationship changes.

Optionally, the apparatus further includes:
an eleventh receiving unit, configured to receive second indication signaling at least once, where the second indication signaling is used to indicate the first association relationship.

Optionally, the aperiodically obtaining the first association relationship includes:
receiving third indication signaling sent by the terminal, where the third indication signaling is used to indicate an association relationship between an uplink reference signal for positioning in an instance of an uplink reference signal for positioning within a first time window before a first moment t and a first TEG; and
the first time window includes latest P instances of uplink reference signals for positioning before the first moment t, P is a positive integer, and P is obtained in at least one manner of protocol agreement, network indication, and terminal selection.

Optionally, the periodically obtaining the first association relationship includes at least one of the following:
receiving fourth indication signaling sent by the terminal according to a period T and/or a period offset, where the fourth indication signaling is used to indicate an association relationship between uplink reference signals for positioning at adjacent period intervals and a TEG; and
obtaining the first association relationship from a terminal receive-transmit time difference (LTE Rx-Tx time difference) measurement report.

Optionally, the first information includes the second association relationship, and the second obtaining unit is configured to:
in a case that a downlink positioning measurement result received by the location server includes a downlink reference signal time difference (DL-RSTD), a receive-transmit time difference (Rx-Tx time difference), or another type of downlink measurement result, for a target positioning measurement result, obtain an association that is between the target positioning measurement result and N second TEGs and that is indicated by the terminal, where
the target positioning measurement result is a positioning measurement result obtained by the terminal by measuring a resource of a target downlink reference signal for positioning, N is a positive integer greater than or equal to 1, and N is obtained in at least one manner of protocol agreement, network indication, and terminal selection.

Optionally, the obtaining an association relationship between the target positioning measurement result and N second TEGs includes at least one of the following:
obtaining paths that are associated with the N second TEGs and that are indicated by the terminal;
obtaining receive beam indexes that are associated with the N second TEGs and that are indicated by the terminal;
obtaining an indication of the terminal indicating that the N second TEGs are obtained by sweeping a plurality of receive beams or by simultaneously measuring the resource of the target downlink reference signal for positioning;
obtaining time stamps that are of downlink positioning measurement results associated with the N second TEGs and that are indicated by the terminal;
obtaining a time difference that is between the N second TEGs and that is indicated by the terminal;
obtaining location information that is associated with the N second TEGs in the terminal and that is indicated by the terminal;
obtaining downlink positioning measurement results that are associated with the N second TEGs and that are reported by the terminal; and
obtaining an association relationship that is between the target positioning measurement result and the N second TEGs and that is indicated in downlink positioning measurement results corresponding to different time stamps.

Optionally, the apparatus further includes:
a seventh sending unit, configured to send fifth indication signaling to the terminal, where the fifth indication signaling is used to indicate the terminal to measure the resource of the target downlink reference signal for positioning through Rx TEG sweeping.

Optionally, the seventh sending unit is further configured to:
not indicate spatial QCL information of the resource of the target downlink reference signal for positioning; and
indicate the resource of the target downlink reference signal for positioning to be repeated.

Optionally, the instructing the terminal to measure the resource of the downlink reference signal for positioning through Rx TEG sweeping includes at least one of the following:
instructing the terminal to measure the resource of the target downlink reference signal for positioning once through Rx TEG sweeping across M periods, where M is a positive integer, and M is obtained in at least one manner of protocol agreement, network indication, and terminal selection;
instructing the terminal to perform sweeping in partial Rx TEGs or instructing the terminal to perform sweeping across partial Rx TEGs; and
instructing the terminal to report downlink positioning measurement results associated with different Rx TEGs.

Optionally, the instructing the terminal to measure the resource of the target downlink reference signal for positioning once through Rx TEG sweeping across M periods further includes at least one of the following:
indicating a total quantity of Rx TEGs in Rx TEG sweeping; and
indicating a quantity of Rx TEGs in Rx TEG sweeping in each instance of a downlink reference signal for positioning.

Optionally, the apparatus further includes:
an eighth sending unit, configured to send sixth indication signaling to the terminal in a case that the terminal indicates N second TEGs and/or measurement results of N second TEGs and/or a plurality of receive beam indexes that are associated with a resource of a first downlink reference signal for positioning, where
the sixth indication signaling is used to indicate the terminal to use the resource of the first downlink reference signal for positioning as a reference resource for a resource of a second downlink reference signal for positioning.

Optionally, the first information includes the second association relationship, and the second obtaining unit is configured to:
in a case that a downlink positioning measurement result received by the location server includes a terminal receive-transmit time difference (UE Rx-Tx time difference), performing, by the base station, one of the following:
obtaining an association relationship among the downlink positioning measurement result, an Rx TEG and a Tx TEG;
obtaining an association relationship between the downlink positioning measurement result and an RxTx TEG; and
obtaining an association relationship between the downlink positioning measurement result and an Rx TEG.

Optionally, the apparatus further includes:
a twelfth receiving unit, configured to receive information indicated by the terminal that a timing error of a downlink positioning measurement result is compensated or not compensated.

Optionally, the apparatus further includes:
a ninth sending unit, configured to send seventh indication signaling to the terminal, where the seventh indication signaling is used to indicate a quantity of TEGs that can be associated when the terminal measures a downlink reference signal for positioning or sends an uplink reference signal for positioning.

Optionally, the apparatus further includes:
a tenth sending unit, configured to send eighth indication signaling to the terminal, where the eighth indication signaling is used to indicate the terminal to calculate and/or report a time difference between second TEGs and/or compensate for an error of a second TEG in a downlink positioning measurement result.

Optionally, the apparatus further includes:
a thirteenth receiving unit, configured to receive terminal capability information, where
the terminal capability information includes one of the following:
   calibration capability information;
   Rx TEG capability information;
   Tx TEG capability information; and
   RxTx TEG capability information.

Optionally, the apparatus further includes:
a third obtaining unit, configured to obtain third information indicated by the base station, where the third information is used to assist the location server in performing positioning calculation; and
the third information includes at least one of the following:
   a third association relationship, where the third association relationship is used to indicate an association relationship between a downlink reference signal for positioning and a third timing error group (TEG);
   a fourth association relationship, where the fourth association relationship is used to indicate an association relationship between an uplink positioning measurement result and a fourth TEG; and
   an uplink positioning measurement result.

Optionally, the apparatus further includes:
a seventh indication unit, configured to indicate the first association relationship to the base station.

Optionally, the apparatus further includes:
a fourth obtaining unit, configured to obtain fourth information indicated by the base station, where
the fourth information includes at least one of the following:
   a time difference between first TEGs;
   confidence or quality of a time difference between first TEGs;
   a method for obtaining a first TEG; and
   a TEG identifier associated with a first TEG.

Optionally, the apparatus further includes:
an eleventh sending unit, configured to send ninth indication signaling to the base station, where the ninth indication signaling is used to instruct the base station to calculate and/or report a time difference between first TEGs and/or compensate for an error of a first TEG in an uplink positioning measurement result.

Optionally, the third obtaining unit is configured to:
receive an uplink positioning measurement result reported by the base station, where the uplink positioning measurement result includes the first association relationship.

Optionally, the third obtaining unit is further configured to:
obtain identifier information of an uplink reference signal for positioning associated with the uplink positioning measurement result, where
the identifier information of the uplink reference signal for positioning includes at least one of the following:
   resource set identifier ID of an uplink reference signal for positioning;
   resource ID of an uplink reference signal for positioning;
   a serving cell ID or a carrier ID;
   a bandwidth part (BWP) ID;
   a bandwidth indicator;
   a time stamp corresponding to an instance of an uplink reference signal for positioning;
   an instance identifier of an uplink reference signal for positioning; and
   frequency domain location information of a carrier and/or a BWP on which an uplink reference signal for positioning is located.

Optionally, the apparatus further includes at least one of the following:
a fourth obtaining unit, configured to obtain terminal capability information; and
a twelfth sending unit, configured to send the terminal capability information to the base station, where
the terminal capability information includes one of the following:
   calibration capability information;
   Rx TEG capability information;
   Tx TEG capability information; and
   RxTx TEG capability information.

In this embodiment of this application, an association relationship between an uplink reference signal for positioning and a first timing error group (TEG) and/or an association relationship between a downlink positioning measurement result and a second TEG that are indicated by a terminal are/is obtained, and/or second information is indicated to the terminal, to assist in positioning calculation, thereby reducing or eliminating impact of a timing error group on positioning precision and improving positioning precision.

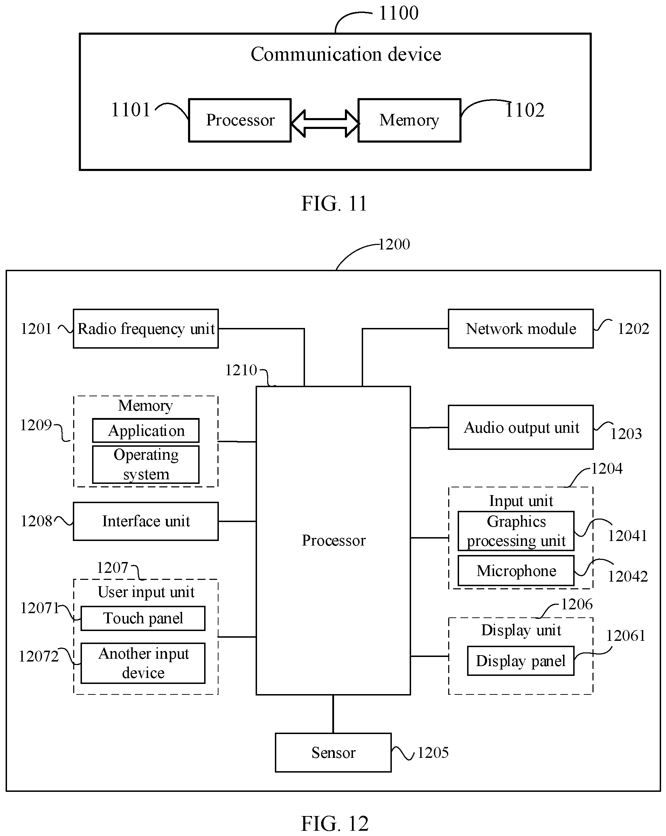

Optionally, as shown in FIG. 11, an embodiment of this application further provides a communication device 1100, including a processor 1101, a memory 1102, and a program or an instruction stored in the memory 1102 and executable on the processor 1101. For example, when the communication device 1100 is a terminal, the program or the instruction is executed by the processor 1101 to implement the processes of the foregoing timing error group indication method embodiment, and a same technical effect can be achieved. When the communication device 1100 is a network side device, the program or the instruction is executed by the processor 1101 to implement the processes of the foregoing timing error group indication method embodiment, and a same technical effect can be achieved. To avoid repetition, details are not described herein again.

An embodiment of this application further provides a terminal, including a processor and a communication interface, where the processor is configured to indicate first information to a network side device, where the first information is used to assist the network side device in performing positioning calculation; and/or the communication interface is configured to receive second information sent by the network side device, where the first information includes at least one of the following: a first association relationship, where the first association relationship is used to indicate an association relationship between an uplink reference signal for positioning and a first timing error group (TEG); and a second association relationship, where the second association relationship is used to indicate an association relationship between a downlink positioning measurement result and a second TEG; and the second information is used to assist a terminal and/or the network side device in performing positioning calculation; where the second information is used to indicate that there is an association relationship between a resource set of a downlink reference signal for positioning and an antenna port of a transmission and receiving point (TRP) and/or between a resource of a downlink reference signal for positioning and the antenna port of the TRP. This terminal embodiment corresponds to the foregoing method embodiment on the terminal side. Each implementation process and implementation of the foregoing method embodiment may be applicable to this terminal embodiment, and a same technical effect can be achieved. Specifically, FIG. 12 is a schematic structural diagram of hardware of a terminal according to an embodiment of this application.

A terminal 1200 includes but is not limited to at least a part of components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art can understand that the terminal 1200 may further include a power supply (such as a battery) that supplies power to each component. The power supply may be logically connected to the processor 1210 by using a power supply management system, to implement functions such as charging and discharging management, and power consumption management by using the power supply management system. The terminal structure shown in FIG. 12 constitutes no limitation on the terminal, and the terminal may include more or fewer components than those shown in the figure, or combine some components, or have different component arrangements. Details are not described herein.

It should be understood that, in this embodiment of this application, the input unit 1204 may include a graphics processing unit (Graphics Processing Unit, GPU) 12041 and a microphone 12042, and the graphics processing unit 12041 processes image data of a still picture or a video obtained by an image capture apparatus (such as a camera) in a video capture mode or an image capture mode. The display unit 1206 may include a display panel 12061. Optionally, the display panel 12061 may be configured in a form such as a liquid crystal display or an organic light-emitting diode. The user input unit 1207 includes a touch panel 12071 and another input device 12072. The touch panel 12071 is also referred to as a touchscreen. The touch panel 12071 may include two parts: a touch detection apparatus and a touch controller. The another input device 12072 may include but is not limited to a physical keyboard, a functional button (such as a volume control button or a power on/off button), a trackball, a mouse, and a joystick. Details are not described herein.

In this embodiment of this application, the radio frequency unit 1201 receives downlink data from a network side device and then sends the downlink data to the processor 1210 for processing; and sends uplink data to the network side device. Usually, the radio frequency unit 1201 includes but is not limited to an antenna, at least one amplifier, a transceiver, a coupler, a low noise amplifier, a duplexer, and the like.

The memory 1209 may be configured to store a software program or an instruction and various data. The memory 1209 may mainly include a program or instruction storage area and a data storage area. The program or instruction storage area may store an operating system, and an application or an instruction required by at least one function (for example, a sound playing function or an image playing function). In addition, the memory 1209 may include a high-speed random access memory, and may further include a non-volatile memory. The non-volatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1210 may include one or more processing units. Optionally, an application processor and a modem processor may be integrated into the processor 1210. The application processor mainly processes an operating system, a user interface, an application, an instruction, or the like. The modem processor mainly processes wireless communication, for example, a baseband processor. It can be understood that, alternatively, the modem processor may not be integrated into the processor 1210.

The processor 1210 is configured to indicate first information to a network side device, where the first information is used to assist the network side device in performing positioning calculation;
and/or
the radio frequency unit 1201 is configured to receive second information sent by the network side device, where the second information is used to assist a terminal and/or the network side device in performing positioning calculation; and
the second information is used to indicate that there is an association relationship between a resource set of a downlink reference signal for positioning and an antenna port of a transmission and receiving point (TRP) and/or between a resource of a downlink reference signal for positioning and the antenna port of the TRP.

In this embodiment of this application, first information is indicated to a network side device and/or second information is received, to assist the network side device in performing positioning calculation, thereby reducing or eliminating impact of a timing error group on positioning precision and improving positioning precision.

Optionally, the radio frequency unit 1201 is further configured to receive a first request message sent by the network side device, where the first request message is used to request the terminal to indicate the first information.

Optionally, the first information includes the first association relationship, and the first indication unit is configured to perform at least one of the following:
indicating the first association relationship by using a sequence of an uplink reference signal for positioning;
indicating the first association relationship in a mapping manner of an uplink reference signal for positioning;
indicating the first association relationship in an event trigger manner;
aperiodically indicating the first association relationship; and
periodically indicating the first association relationship.

Optionally, the sequence of the uplink reference signal for positioning is generated according to a cyclic shift corresponding to the first TEG associated with the uplink reference signal for positioning, and different first TEGs correspond to different cyclic shifts.

Optionally, the mapping manner of the uplink reference signal for positioning is determined according to a time-frequency location corresponding to the first TEG associated with the uplink reference signal for positioning, and different first TEGs are distinguished through frequency division multiplexing.

Optionally, the radio frequency unit 1201 is further configured to:
receive first indication signaling sent by the network side device, where the first indication signaling is used to indicate the terminal to enable a function of indicating the first association relationship by using the sequence of the uplink reference signal for positioning and/or using the mapping manner of the uplink reference signal for positioning; and

The processor 1210 is further configured to enable the function of indicating the first association relationship by using the sequence of the uplink reference signal for positioning and/or using the mapping manner of the uplink reference signal for positioning.

Optionally, the indicating the first association relationship in an event trigger manner includes:
in a case that the first TEG associated with the uplink reference signal for positioning changes in a process of transmitting the uplink reference signal for positioning, triggering the terminal to send TEG indication signaling, where
the TEG indication signaling is used to indicate the first association relationship or indicate that the first association relationship changes.

Optionally, content of the TEG indication signaling includes one of the following:
indicating that an association relationship between an uplink reference signal for positioning in a latest instance of an uplink reference signal for positioning and a first TEG before the TEG indication signaling changes, and the TEG indication signaling takes effect until a latest second instance of an uplink reference signal for positioning before next TEG indication signaling; and
indicating that an association relationship between an uplink reference signal for positioning in a latest instance of an uplink reference signal for positioning and a first TEG after the TEG indication signaling changes, and the TEG indication signaling takes effect until a latest instance of an uplink reference signal for positioning before the next TEG indication signaling.

Optionally, the radio frequency unit 1201 is further configured to:
send second indication signaling at least once, where the second indication signaling is used to indicate the first association relationship.

Optionally, the aperiodically indicating the first association relationship includes:
sending third indication signaling at a first moment t, where the third indication signaling is used to indicate an association relationship between an uplink reference signal for positioning in an instance of an uplink reference signal for positioning within a first time window before the first moment t and a first TEG; and
the first time window includes latest P instances of uplink reference signals for positioning before the first moment t, P is a positive integer, and P is obtained in at least one manner of protocol agreement, network indication, and terminal selection.

Optionally, the periodically indicating the first association relationship includes:
sending fourth indication signaling according to a period T and/or a period offset, where the fourth indication signaling is used to indicate an association relationship between uplink reference signals for positioning at adjacent period intervals and a first TEG.

Optionally, the period T and/or the period offset are/is related to a sending period of an uplink reference signal for positioning or a sending period of an uplink reference signal for positioning measurement result.

Optionally, the periodically indicating the first association relationship includes:
indicating the first association relationship in a terminal receive-transmit time difference (LTE Rx-Tx time difference) measurement report.

Optionally, the first association relationship includes identifier information of an uplink reference signal for positioning; and
the identifier information of the uplink reference signal for positioning includes at least one of the following:
resource set identifier ID of an uplink reference signal for positioning;
resource ID of an uplink reference signal for positioning;
a serving cell ID or a carrier ID;
a bandwidth part (BWP) ID;
a bandwidth indicator;
a time stamp corresponding to an instance of an uplink reference signal for positioning;
an instance identifier of an uplink reference signal for positioning; and
frequency domain location information of a carrier and/or a BWP on which an uplink reference signal for positioning is located.

Optionally, the first information includes the second association relationship, and the first indication unit is configured to:
in a case that a downlink positioning measurement result includes a downlink reference signal time difference (DL-RSTD), a receive-transmit time difference (Rx-Tx time difference), or another type of downlink measurement result, for a target positioning measurement result, indicate an association relationship between the target positioning measurement result and N second TEGs, where
the target positioning measurement result is a positioning measurement result obtained by the terminal by measuring a resource of a target downlink reference signal for positioning, N is a positive integer greater than or equal to 1, and N is obtained in at least one manner of protocol agreement, network indication, and terminal selection.

Optionally, the indicating an association relationship between the target positioning measurement result and N second TEGs includes at least one of the following:
indicating paths associated with the N second TEGs;
indicating receive beam indexes associated with the N second TEGs;
indicating that the N second TEGs are obtained by sweeping a plurality of receive beams or by simultaneously measuring the resource of the target downlink reference signal for positioning;
indicating time stamps of downlink positioning measurement results associated with the N second TEGs;
indicating a time difference between the N second TEGs;
indicating location information associated with the N second TEGs in the terminal;
reporting downlink positioning measurement results associated with the N second TEGs; and
indicating an association relationship between the target positioning measurement result and the N second TEGs in downlink positioning measurement results corresponding to different time stamps.

Optionally, the indicating an association relationship between the target positioning measurement result and N second TEGs includes:
in a case that a first preset condition is met, reporting an association relationship between the target positioning measurement result and a plurality of second TEGs, where
the first preset condition includes at least one of the following that:
   quality of downlink positioning measurement results associated with the plurality of second TEGs exceeds a first preset threshold;
   the downlink positioning measurement results associated with the plurality of second TEGs are line of sight (LOS) measurement results, or an LOS probability of a downlink positioning measurement result is greater than a second preset threshold; and
   when the terminal performs receive beam sweeping, different receive beams are associated with different second TEGs, and quality of downlink positioning measurement results corresponding to a plurality of receive beams exceeds a third preset threshold.

Optionally, the indicating an association relationship between the target positioning measurement result and N second TEGs includes:
in a case that the terminal is configured with a quasi co-location (QCL) relationship of the resource of the target downlink reference signal for positioning, indicating an association relationship between the target positioning measurement result and one second TEG.

Optionally, the radio frequency unit 1201 is further configured to:
receive fifth indication signaling sent by the network side device, where the fifth indication signaling is used to indicate the terminal to measure the resource of the target downlink reference signal for positioning through Rx TEG sweeping.

Optionally, that the terminal measures the resource of the target downlink reference signal for positioning through Rx TEG sweeping needs to meet at least one of the following that:
the network side device does not indicate spatial QCL information of the resource of the target downlink reference signal for positioning; and
the network side device indicates the resource of the target downlink reference signal for positioning to be repeated.

Optionally, the instructing the terminal to measure the resource of the target downlink reference signal for positioning through Rx TEG sweeping includes at least one of the following:
instructing the terminal to measure the resource of the target downlink reference signal for positioning once through Rx TEG sweeping across M periods, where M is a positive integer, and M is obtained in at least one manner of protocol agreement, network indication, and terminal selection;
instructing the terminal to perform sweeping in partial Rx TEGs or instructing the terminal to perform sweeping across partial Rx TEGs; and
instructing the terminal to report downlink positioning measurement results associated with different Rx TEGs.

Optionally, the instructing the terminal to measure the resource of the target downlink reference signal for positioning once through Rx TEG sweeping across M periods further includes at least one of the following:
indicating a total quantity of Rx TEGs in Rx TEG sweeping; and
indicating a quantity of Rx TEGs in Rx TEG sweeping in each instance of a downlink reference signal for positioning.

Optionally, the radio frequency unit 1201 is further configured to:
send a reason why Rx TEG sweeping cannot be performed according to the instruction of the network side device or a reason why the terminal cannot report a downlink positioning measurement result.

Optionally, the radio frequency unit 1201 is further configured to:
in a case that the terminal indicates N second TEGs and/or measurement results of N second TEGs and/or a plurality of receive beam indexes that are associated with a resource of a first downlink reference signal for positioning, receive sixth indication signaling sent by the network side device, where the sixth indication signaling is used to indicate the terminal to use the resource of the first downlink reference signal for positioning as a reference resource for a resource of a second downlink reference signal for positioning; and
receive the resource of the second downlink reference signal for positioning by using the N second TEGs or the plurality of receive beam indexes that are associated with the resource of a first downlink reference signal for positioning.

Optionally, the first information includes the second association relationship, and the first indication unit is configured to:
in a case that a downlink positioning measurement result includes a terminal receive-transmit time difference (UE Rx-Tx time difference), performing, by the terminal, one of the following:
indicating an association relationship among the downlink positioning measurement result, an Rx TEG and a Tx TEG;
indicating an association relationship between the downlink positioning measurement result and an RxTx TEG; and
indicating an association relationship between the downlink positioning measurement result and an Rx TEG.

Optionally, the processor 1210 is further configured to:
indicate that a timing error of a downlink positioning measurement result is compensated or not compensated.

Optionally, the radio frequency unit 1201 is further configured to:
receive seventh indication signaling sent by the network side device, where the seventh indication signaling is used to indicate a quantity of TEGs that can be associated when the terminal measures a downlink reference signal for positioning or sends an uplink reference signal for positioning.

Optionally, the radio frequency unit 1201 is further configured to:
receive eighth indication signaling sent by the network side device, where the eighth indication signaling is used to indicate the terminal to calculate and/or report a time difference between second TEGs and/or compensate for an error of a second TEG in a downlink positioning measurement result.

Optionally, the radio frequency unit 1201 is further configured to:
report terminal capability information to the network side device, where
the terminal capability information includes one of the following:
   calibration capability information;
   Rx TEG capability information;
   Tx TEG capability information; and
   RxTx TEG capability information.

Optionally, the calibration capability information includes at least one of the following that:
the terminal does not support calibration of a receive timing error Rx timing error, a transmit timing error Tx timing error, and a receive-transmit timing error RxTx timing error;
the terminal supports calibration of an Rx timing error;
the terminal supports calibration of a Tx timing error; and
the terminal supports calibration of an RxTx timing error.

Optionally, the Rx TEG capability information includes at least one of the following:
a quantity of Rx TEGs supported by the terminal;
a quantity of Rx TEGs that can be activated or has been activated by the terminal; and
a maximum quantity of Rx TEGs associated with one resource of a downlink reference signal for positioning or a positioning measurement result of one resource of a downlink reference signal for positioning at a same moment.

Optionally, the Tx TEG capability information includes at least one of the following:
a quantity of Tx TEGs supported by the terminal;
a quantity of Tx TEGs that can be activated or has been activated by the terminal; and
a quantity of Tx TEGs associated with a resource of an uplink reference signal for positioning sent by the terminal.

Optionally, the RxTx TEG capability information includes at least one of the following:
a quantity of RxTx TEGs supported by the terminal; and
a quantity of RxTx TEGs that can be activated or has been activated by the terminal.

Optionally, the processor 1210 is further configured to:
determine that there is an association relationship between a plurality of resource sets of downlink reference signals for positioning and a plurality of antenna in a TRP;
determine that there is an association relationship between a plurality of resources of downlink reference signals for positioning in a resource set of a downlink reference signal for positioning and a plurality of antenna ports in a TRP; and
determine that there is an association relationship between a plurality of repeated resources of downlink reference signals for positioning corresponding to a same resource identifier of a downlink reference signal for positioning and a plurality of antenna ports in a TRP.

Optionally, that there is an association relationship between a plurality of resource sets of downlink reference signals for positioning of a TRP and a plurality of antenna ports in a TRP includes one of the following that:
different resource sets of downlink reference signals for positioning are associated with different groups of antenna ports in a TRP; and
at least one resource set of a downlink reference signal for positioning is associated with one group of antenna ports in a TRP, where
one group of antenna ports in a TRP include at least one TRP antenna port.

Optionally, that there is an association relationship between a plurality of resources of downlink reference signals for positioning in a resource set of a downlink reference signal for positioning and a plurality of antenna ports in a TRP includes one of the following that:
different resources of downlink reference signals for positioning in the resource set of the downlink reference signal for positioning are associated with different antenna ports in a TRP; and
at least one resource of a downlink reference signal for positioning in the resource set of the downlink reference signal for positioning is associated with a same antenna port of TRP, where
one resource of a downlink reference signal for positioning is associated with one or more antenna ports in a TRP.

Optionally, that there is an association relationship between a plurality of repeated resources of downlink reference signals for positioning corresponding to a same resource identifier of a downlink reference signal for positioning and a plurality of antenna ports in a TRP includes one of the following that:
different repeated resources of downlink reference signals for positioning are associated with different antenna ports in a TRP; and
at least one repeated resource of a downlink reference signal for positioning is associated with a same antenna port of TRP.

Optionally, the resource set of the downlink reference signal for positioning, and/or the resource of the downlink reference signal for positioning, and/or resource for repetition of the downlink reference signal for positioning needs to be associated with all antenna ports in a TRP.

Optionally, the second information further includes a function indication of the resource set of the downlink reference signal for positioning and/or the resource of the downlink reference signal for positioning.

Optionally, the processor 1210 is further configured to:
measure channels of different ports, and performing a codebook traversal process to obtain a best codebook and/or a best AOD matching a channel.

Optionally, the second information further includes at least one of the following:
an association relationship between a resource set of a downlink reference signal for positioning and a TRP antenna port;
an association relationship between a resource of a downlink reference signal for positioning and a TRP antenna port; and
an association relationship between a repeated resource of a downlink reference signal for positioning and a TRP antenna port.

An embodiment of this application further provides a network side device, including a processor and a communication interface. The processor is configured to indicate third information to a location server, where the third information is used to assist the location server in performing positioning calculation; and the third information includes at least one of the following: a third association relationship, where the third association relationship is used to indicate an association relationship between a downlink reference signal for positioning and a third timing error group (TEG); and a fourth association relationship, where the fourth association relationship is used to indicate an association relationship between an uplink positioning measurement result and a fourth TEG; and/or the processor is configured to indicate second information to a terminal, where the second information is used to indicate that there is an association relationship between a resource set of a downlink reference signal for positioning and an antenna port of a transmission and receiving point (TRP) and/or between a resource of a downlink reference signal for positioning and the antenna port of the TRP. This network side device embodiment corresponds to the foregoing method embodiment on the network side device. Each implementation process and implementation of the foregoing method embodiment may be applicable to this network side device embodiment, and a same technical effect can be achieved.

Alternatively, the processor is configured to: obtain first information indicated by a terminal, where the first information is used to assist the location server or a base station in performing positioning calculation, where the first information includes at least one of the following: a first association relationship, where the first association relationship is used to indicate an association relationship between an uplink reference signal for positioning and a first timing error group (TEG); and a second association relationship, where the second association relationship is used to indicate an association relationship between a downlink positioning measurement result and a second TEG; and/or indicate second information to the terminal, where the second information is used to indicate that there is an association relationship between a resource set of a downlink reference signal for positioning and an antenna port of a transmission and receiving point (TRP) and/or between a resource of a downlink reference signal for positioning and the antenna port of the TRP.

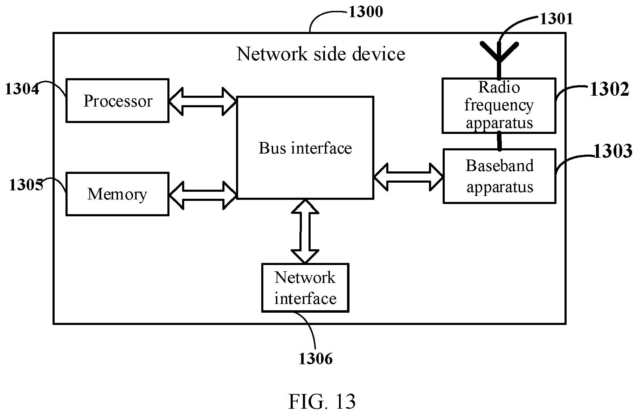

Specifically, an embodiment of this application further provides a network side device. As shown in FIG. 13, a network device 1300 includes an antenna 1301, a radio frequency apparatus 1302, and a baseband apparatus 1303. The antenna 1301 is connected to the radio frequency apparatus 1302. In an uplink direction, the radio frequency apparatus 1302 receives information by using the antenna 1301, and sends the received information to the baseband apparatus 1303 for processing. In a downlink direction, the baseband apparatus 1303 processes to-be-sent information, and sends the information to the radio frequency apparatus 1302. The radio frequency apparatus 1302 processes the received information and then sends the information by using the antenna 1301.

The frequency band processing apparatus may be located in the baseband apparatus 1303. The method performed by the network side device in the foregoing embodiment may be implemented in the baseband apparatus 1303. The baseband apparatus 1303 includes a processor 1304 and a memory 1305.

The baseband apparatus 1303 may include, for example, at least one baseband board, where a plurality of chips are disposed on the baseband board. As shown in FIG. 13, one chip is, for example, the processor 1304, which is connected to the memory 1305, so as to invoke a program in the memory 1305 to perform operations of the network device shown in the foregoing method embodiment.

The baseband apparatus 1303 may further include a network interface 1306, configured to exchange information with the radio frequency apparatus 1302. For example, the interface is a common public radio interface (common public radio interface, CPRI for short).

Specifically, the network side device in this embodiment of the present invention further includes an instruction or a program stored in the memory 1305 and executable on the processor 1304. The processor 1304 invokes the instruction or the program in the memory 1305 to perform the method performed by the modules shown in FIG. 9 or FIG. 10, and a same technical effect is achieved. To avoid repetition, details are not described herein again.

An embodiment of this application further provides a readable storage medium. The readable storage medium stores a program or an instruction, and when the program or the instruction is executed by a processor, the processes of the foregoing timing error group indication method embodiment are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes of the foregoing timing error group indication method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A timing error group indication method, comprising:
indicating, by a terminal, first information to a network side device, wherein the first information is used to assist the network side device in performing positioning calculation; and
the first information comprises at least one of following:
a first association relationship, wherein the first association relationship is used to indicate an association relationship between an uplink reference signal for positioning and a first timing error group (TEG); and
a second association relationship, wherein the second association relationship is used to indicate an association relationship between a downlink positioning measurement result and a second TEG;
and/or
receiving, by the terminal, second information sent by the network side device, wherein the second information is used to assist the terminal and/or the network side device in performing positioning calculation; and
the second information is used to indicate that there is an association relationship between a resource set of a downlink reference signal for positioning and an antenna port of a transmission and receiving point (TRP) and/or between a resource of a downlink reference signal for positioning and the antenna port of the TRP.

2. The timing error group indication method according to claim 1, wherein before the indicating, by a terminal, first information to a network side device, the method further comprises:
receiving, by the terminal, a first request message sent by the network side device, wherein the first request message is used to request the terminal to indicate the first information.

3. The timing error group indication method according to claim 1 or 2, wherein the first information comprises the first association relationship, and the indicating, by a terminal, first information to a network side device comprises at least one of following:
indicating the first association relationship by using a sequence of an uplink reference signal for positioning;
indicating the first association relationship in a mapping manner of an uplink reference signal for positioning;
indicating the first association relationship in an event trigger manner;
aperiodically indicating the first association relationship; and
periodically indicating the first association relationship.

4. The timing error group indication method according to claim 3, wherein the sequence of the uplink reference signal for positioning is generated according to a cyclic shift corresponding to the first TEG associated with the uplink reference signal for positioning, and different first TEGs correspond to different cyclic shifts.

5. The timing error group indication method according to claim 3, wherein the mapping manner of the uplink reference signal for positioning is determined according to a time-frequency location corresponding to the first TEG associated with the uplink reference signal for positioning, and different first TEGs are distinguished through frequency division multiplexing.

6. The timing error group indication method according to any one of claims 3 to 5, further comprising:
receiving, by the terminal, first indication signaling sent by the network side device, wherein the first indication signaling is used to indicate the terminal to enable a function of indicating the first association relationship by using the sequence of the uplink reference signal for positioning and/or using the mapping manner of the uplink reference signal for positioning; and
enabling, by the terminal, the function of indicating the first association relationship by using the sequence of the uplink reference signal for positioning and/or using the mapping manner of the uplink reference signal for positioning.

7. The timing error group indication method according to claim 3, wherein the indicating the first association relationship in an event trigger manner comprises:
in a case that the first TEG associated with the uplink reference signal for positioning changes in a process of transmitting the uplink reference signal for positioning, triggering the terminal to send TEG indication signaling, wherein
the TEG indication signaling is used to indicate the first association relationship or indicate that the first association relationship changes.

8. The timing error group indication method according to claim 7, wherein content of the TEG indication signaling comprises one of following:
indicating that an association relationship between an uplink reference signal for positioning in a latest instance of an uplink reference signal for positioning before the TEG indication signaling and a first TEG changes, and the TEG indication signaling takes effect until a latest second instance of an uplink reference signal for positioning before next TEG indication signaling; and
indicating that an association relationship between an uplink reference signal for positioning in a latest instance of an uplink reference signal for positioning after the TEG indication signaling and a first TEG changes, and the TEG indication signaling takes effect until a latest instance of an uplink reference signal for positioning before the next TEG indication signaling.

9. The timing error group indication method according to claim 7, wherein before the terminal sends the TEG indication signaling, the method further comprises:
sending, by the terminal, second indication signaling at least once, wherein the second indication signaling is used to indicate the first association relationship.

10. The timing error group indication method according to claim 3, wherein the aperiodically indicating the first association relationship comprises:
sending, by the terminal, third indication signaling at a first moment t, wherein the third indication signaling is used to indicate an association relationship between an uplink reference signal for positioning in an instance of an uplink reference signal for positioning within a first time window before the first moment t and a first TEG; and
the first time window comprises latest P instances of uplink reference signals for positioning before the first moment t, P is a positive integer, and P is obtained in at least one manner of protocol agreement, network indication, and terminal selection.

11. The timing error group indication method according to claim 3, wherein the periodically indicating the first association relationship comprises:
sending fourth indication signaling according to a period T and/or a period offset, wherein the fourth indication signaling is used to indicate an association relationship between uplink reference signals for positioning at adjacent period intervals and a first TEG.

12. The timing error group indication method according to claim 11, wherein the period T and/or the period offset are/is related to a sending period of an uplink reference signal for positioning or a sending period of an uplink reference signal for positioning measurement result.

13. The timing error group indication method according to claim 3, wherein the periodically indicating the first association relationship comprises:
indicating the first association relationship in a terminal receive-transmit time difference (LTE Rx-Tx time difference) measurement report.

14. The timing error group indication method according to any one of claims 1 to 13, wherein the first association relationship comprises identifier information of an uplink reference signal for positioning; and
the identifier information of the uplink reference signal for positioning comprises at least one of following:
resource set identifier ID of an uplink reference signal for positioning;
resource ID of an uplink reference signal for positioning;
a serving cell ID or a carrier ID;
a bandwidth part (BWP) ID;
a bandwidth indicator;
a time stamp corresponding to an instance of an uplink reference signal for positioning;
an instance identifier of an uplink reference signal for positioning; and
frequency domain location information of a carrier and/or a BWP on which an uplink reference signal for positioning is located.

15. The timing error group indication method according to claim 1, wherein the first information comprises the second association relationship, and the indicating, by a terminal, first information to a network side device comprises:
in a case that a downlink positioning measurement result comprises a downlink reference signal time difference (DL-RSTD), a receive-transmit time difference (Rx-Tx time difference), or another type of downlink measurement result, for a target positioning measurement result, indicating, by the terminal, an association relationship between the target positioning measurement result and N second TEGs, wherein
the target positioning measurement result is a positioning measurement result obtained by the terminal by measuring a resource of a target downlink reference signal for positioning, N is a positive integer greater than or equal to 1, and N is obtained in at least one manner of protocol agreement, network indication, and terminal selection.

16. The timing error group indication method according to claim 15, wherein the indicating, by the terminal, an association relationship between the target positioning measurement result and N second TEGs comprises at least one of following:
indicating, by the terminal, paths associated with the N second TEGs;
indicating, by the terminal, receive beam indexes associated with the N second TEGs;
indicating, by the terminal, that the N second TEGs are obtained by sweeping a plurality of receive beams or by simultaneously measuring the resource of the target downlink reference signal for positioning;
indicating, by the terminal, time stamps of downlink positioning measurement results associated with the N second TEGs;
indicating, by the terminal, a time difference between the N second TEGs;
indicating, by the terminal, location information associated with the N second TEGs in the terminal;
reporting, by the terminal, downlink positioning measurement results associated with the N second TEGs; and
indicating an association relationship between the target positioning measurement result and the N second TEGs in downlink positioning measurement results corresponding to different time stamps.

17. The timing error group indication method according to claim 15, wherein the indicating, by the terminal, an association relationship between the target positioning measurement result and N second TEGs comprises:
in a case that a first preset condition is met, reporting, by the terminal, an association relationship between the target positioning measurement result and a plurality of second TEGs, wherein
the first preset condition comprises at least one of following that:
quality of downlink positioning measurement results associated with the plurality of second TEGs exceeds a first preset threshold;
the downlink positioning measurement results associated with the plurality of second TEGs are line of sight (LOS) measurement results, or an LOS probability of a downlink positioning measurement result is greater than a second preset threshold; and
when the terminal performs receive beam sweeping, different receive beams are associated with different second TEGs, and quality of downlink positioning measurement results corresponding to a plurality of receive beams exceeds a third preset threshold.

18. The timing error group indication method according to claim 15, wherein the indicating, by the terminal, an association relationship between the target positioning measurement result and N second TEGs comprises:
in a case that the terminal is configured with a quasi co-location (QCL) relationship of the resource of the target downlink reference signal for positioning, indicating, by the terminal, an association relationship between the target positioning measurement result and one second TEG.

19. The timing error group indication method according to any one of claims 15 to 18, further comprising:
receiving fifth indication signaling sent by the network side device, wherein the fifth indication signaling is used to indicate the terminal to measure the resource of the target downlink reference signal for positioning through Rx TEG sweeping.

20. The timing error group indication method according to claim 19, wherein that the terminal measures the resource of the target downlink reference signal for positioning through Rx TEG sweeping needs to meet at least one of following that:
the network side device does not indicate spatial QCL information of the resource of the target downlink reference signal for positioning; and
the network side device indicates the resource of the target downlink reference signal for positioning to be repeated.

21. The timing error group indication method according to claim 20, wherein the instructing the terminal to measure the resource of the target downlink reference signal for positioning through Rx TEG sweeping comprises at least one of following:
instructing the terminal to measure the resource of the target downlink reference signal for positioning once through Rx TEG sweeping across M periods, wherein M is a positive integer, and M is obtained in at least one manner of protocol agreement, network indication, and terminal selection;
instructing the terminal to perform sweeping in partial Rx TEGs or instructing the terminal to perform sweeping across partial Rx TEGs; and
instructing the terminal to report downlink positioning measurement results associated with different Rx TEGs.

22. The timing error group indication method according to claim 21, wherein the instructing the terminal to measure the resource of the target downlink reference signal for positioning once through Rx TEG sweeping across M periods further comprises at least one of following:
indicating a total quantity of Rx TEGs in Rx TEG sweeping; and
indicating a quantity of Rx TEGs in Rx TEG sweeping in each instance of a downlink reference signal for positioning.

23. The timing error group indication method according to claim 19, further comprising:
sending, by the terminal, a reason why Rx TEG sweeping cannot be performed according to an instruction of the network side device or a reason why the terminal cannot report a downlink positioning measurement result.

24. The timing error group indication method according to claim 15, further comprising:
in a case that the terminal indicates N second TEGs and/or measurement results of N second TEGs and/or a plurality of receive beam indexes that are associated with a resource of a first downlink reference signal for positioning, receiving sixth indication signaling sent by the network side device, wherein the sixth indication signaling is used to indicate the terminal to use the resource of the first downlink reference signal for positioning as a reference resource for a resource of a second downlink reference signal for positioning; and
receiving, by the terminal, the resource of the second downlink reference signal for positioning by using the N second TEGs or the plurality of receive beam indexes that are associated with the resource of the first downlink reference signal for positioning.

25. The timing error group indication method according to claim 1, wherein the first information comprises the second association relationship, and the indicating, by a terminal, first information to a network side device comprises:
in a case that a downlink positioning measurement result comprises a terminal receive-transmit time difference (UE Rx-Tx time difference), performing, by the terminal, one of following:
indicating an association relationship among the downlink positioning measurement result, an Rx TEG and a Tx TEG;
indicating an association relationship between the downlink positioning measurement result and an RxTx TEG; and
indicating an association relationship between the downlink positioning measurement result and an Rx TEG.

26. The timing error group indication method according to claim 1, further comprising:
indicating, by the terminal, that a timing error of a downlink positioning measurement result is compensated or not compensated.

27. The timing error group indication method according to claim 1, wherein before the indicating, by a terminal, first information to a network side device, the method further comprises:
receiving seventh indication signaling sent by the network side device, wherein the seventh indication signaling is used to indicate a quantity of TEGs that can be associated when the terminal measures a downlink reference signal for positioning or sends an uplink reference signal for positioning.

28. The timing error group indication method according to claim 1, wherein before the indicating, by a terminal, first information to a network side device, the method further comprises:
receiving eighth indication signaling sent by the network side device, wherein the eighth indication signaling is used to indicate the terminal to calculate and/or report a time difference between second TEGs and/or compensate for an error of a second TEG in a downlink positioning measurement result.

29. The timing error group indication method according to claim 1, further comprising:
reporting, by the terminal, terminal capability information to the network side device, wherein
the terminal capability information comprises one of following:
calibration capability information;
Rx TEG capability information;
Tx TEG capability information; and
RxTx TEG capability information.

30. The timing error group indication method according to claim 29, wherein the calibration capability information comprises at least one of following that:
the terminal does not support calibration of a receive timing error Rx timing error, a transmit timing error Tx timing error, and a receive-transmit timing error RxTx timing error;
the terminal supports calibration of an Rx timing error;
the terminal supports calibration of a Tx timing error; and
the terminal supports calibration of an RxTx timing error.

31. The timing error group indication method according to claim 29, wherein the Rx TEG capability information comprises at least one of following:
a quantity of Rx TEGs supported by the terminal;
a quantity of Rx TEGs that can be activated or has been activated by the terminal; and
a maximum quantity of Rx TEGs associated with one resource of a downlink reference signal for positioning or a positioning measurement result of one resource of a downlink reference signal for positioning at a same moment.

32. The timing error group indication method according to claim 29, wherein the Tx TEG capability information comprises at least one of following:
a quantity of Tx TEGs supported by the terminal;
a quantity of Tx TEGs that can be activated or has been activated by the terminal; and
a quantity of Tx TEGs associated with a resource of an uplink reference signal for positioning sent by the terminal.

33. The timing error group indication method according to claim 29, wherein the RxTx TEG capability information comprises at least one of following:
a quantity of RxTx TEGs supported by the terminal; and
a quantity of RxTx TEGs that can be activated or has been activated by the terminal.

34. The timing error group indication method according to claim 1, wherein after the receiving the second information sent by the network side device, the terminal performs one of following:
determining, by the terminal, that there is an association relationship between a plurality of resource sets of downlink reference signals for positioning of a TRP and a plurality of antenna ports in a TRP;
determining, by the terminal, that there is an association relationship between a plurality of resources of downlink reference signals for positioning in a resource set of a downlink reference signal for positioning and a plurality of antenna ports in a TRP; and
determining, by the terminal, that there is an association relationship between a plurality of repeated resources of downlink reference signals for positioning corresponding to a same resource identifier of a downlink reference signal for positioning and a plurality of antenna ports in a TRP.

35. The timing error group indication method according to claim 34, wherein that there is an association relationship between a plurality of resource sets of downlink reference signals for positioning and a plurality of antenna ports in a TRP comprises one of following that:
different resource sets of downlink reference signals for positioning are associated with different groups of antenna ports in a TRP; and
at least one resource set of a downlink reference signal for positioning is associated with one group of antenna ports in a TRP, wherein
one group of antenna ports in a TRP comprise at least one TRP antenna port.

36. The timing error group indication method according to claim 34, wherein that there is an association relationship between a plurality of resources of downlink reference signals for positioning in a resource set of a downlink reference signal for positioning and a plurality of antenna ports in a TRP comprises one of following that:
different resources of downlink reference signals for positioning in the resource set of the downlink reference signal for positioning are associated with different antenna ports in a TRP; and
at least one resource of a downlink reference signal for positioning in the resource set of the downlink reference signal for positioning is associated with a same antenna port of TRP, wherein
one resource of a downlink reference signal for positioning is associated with one or more antenna ports in a TRP.

37. The timing error group indication method according to claim 34, wherein that there is an association relationship between a plurality of repeated resources of downlink reference signals for positioning corresponding to a same resource identifier of a downlink reference signal for positioning and a plurality of antenna ports in a TRP comprises one of following that:
different repeated resources of downlink reference signals for positioning are associated with different antenna ports in a TRP; and
at least one repeated resource of a downlink reference signal for positioning is associated with a same antenna port of TRP.

38. The timing error group indication method according to claim 34, wherein the resource set of the downlink reference signal for positioning, and/or the resource of the downlink reference signal for positioning, and/or resource for repetition of the downlink reference signal for positioning needs to be associated with all antenna ports in a TRP.

39. The timing error group indication method according to claim 1, wherein the second information further comprises a function indication of the resource set of the downlink reference signal for positioning and/or the resource of the downlink reference signal for positioning.

40. The timing error group indication method according to claim 1, wherein after the receiving, by the terminal, second information sent by the network side device, the method further comprises:
measuring, by the terminal, channels of different ports, and performing a codebook traversal process to obtain a best codebook and/or a best angle of departure AOD matching a channel.

41. The timing error group indication method according to claim 1, wherein the second information further comprises at least one of following:
an association relationship between a resource set of a downlink reference signal for positioning and a TRP antenna port;
an association relationship between a resource of a downlink reference signal for positioning and a TRP antenna port; and
an association relationship between a repeated resource of a downlink reference signal for positioning and a TRP antenna port.

42. A timing error group indication method, applied to a network side device, wherein the network side device is a base station, and the method comprises:
indicating, by the base station, third information to a location server, wherein the third information is used to assist the location server in performing positioning calculation; and
the third information comprises at least one of following:
a third association relationship, wherein the third association relationship is used to indicate an association relationship between a downlink reference signal for positioning and a third timing error group (TEG);
a fourth association relationship, wherein the fourth association relationship is used to indicate an association relationship between an uplink positioning measurement result and a fourth TEG; and
an uplink positioning measurement result;
and/or
indicating, by the base station, second information to a terminal, wherein the second information is used to indicate that there is an association relationship between a resource set of a downlink reference signal for positioning and an antenna port of a transmission and receiving point (TRP) and/or between a resource of a downlink reference signal for positioning and the antenna port of the TRP.

43. The timing error group indication method according to claim 42, wherein the third information comprises the uplink positioning measurement result, and before the indicating, by the base station, third information to a location server, the method further comprises:
obtaining a first association relationship indicated by the terminal or the location server, wherein the first association relationship is used to indicate an association relationship between an uplink reference signal for positioning and a first TEG.

44. The timing error group indication method according to claim 42, further comprising:
indicating, by the base station, fourth information to the location server, wherein
the fourth information comprises at least one of following:
a time difference between first TEGs;
confidence or quality of a time difference between first TEGs;
a method for obtaining a first TEG; and
a TEG identifier associated with a first TEG.

45. The timing error group indication method according to claim 42, wherein the third information comprises the uplink positioning measurement result, and before the indicating, by the base station, third information to a location server, the method further comprises:
receiving ninth indication signaling sent by the location server, wherein the ninth indication signaling is used to instruct the base station to calculate and/or report a time difference between first TEGs and/or compensate for an error of a first TEG in the uplink positioning measurement result.

46. The timing error group indication method according to claim 43, wherein the indicating, by the base station, third information to a location server comprises:
reporting an uplink positioning measurement result in a case that the first association relationship is indicated by using a sequence and/or a mapping manner, wherein the uplink positioning measurement result comprises the first association relationship.

47. The timing error group indication method according to claim 42, further comprising: reporting, by the base station to the location server, identifier information of an uplink reference signal for positioning associated with the uplink positioning measurement result, wherein
the identifier information of the uplink reference signal for positioning comprises at least one of following:
resource set identifier ID of an uplink reference signal for positioning;
resource ID of an uplink reference signal for positioning;
a serving cell ID or a carrier ID;
a bandwidth part (BWP) ID;
a bandwidth indicator;
a time stamp corresponding to an instance of an uplink reference signal for positioning;
an instance identifier of an uplink reference signal for positioning; and
frequency domain location information of a carrier and/or a BWP on which an uplink reference signal for positioning is located.

48. The timing error group indication method according to any one of claims 42 to 47, further comprising:
receiving, by the base station, terminal capability information sent by the terminal or the location server, wherein
the terminal capability information comprises one of following:
calibration capability information;
Rx TEG capability information;
Tx TEG capability information; and
RxTx TEG capability information.

49. A timing error group indication method, applied to a network side device, wherein the network side device is a location server, and the method comprises:
obtaining, by the location server, first information indicated by a terminal, wherein the first information is used to assist the location server or a base station in performing positioning calculation, wherein
the first information comprises at least one of following:
a first association relationship, wherein the first association relationship is used to indicate an association relationship between an uplink reference signal for positioning and a first timing error group (TEG); and
a second association relationship, wherein the second association relationship is used to indicate an association relationship between a downlink positioning measurement result and a second TEG; and/or
indicating, by the location server, second information to the terminal, wherein the second information is used to indicate that there is an association relationship between a resource set of a downlink reference signal for positioning and an antenna port of a transmission and receiving point (TRP) and/or between a resource of a downlink reference signal for positioning and the antenna port of the TRP.

50. The timing error group indication method according to claim 49, wherein before the obtaining, by the location server, first information indicated by a terminal, the method further comprises:
sending, by the location server, a first request message to the terminal, wherein the first request message is used to request the terminal to indicate the first information.

51. The timing error group indication method according to claim 49, wherein the first information comprises the first association relationship, and the obtaining, by the location server, first information indicated by a terminal comprises at least one of following:
obtaining the first association relationship by using a sequence of an uplink reference signal for positioning;
obtaining the first association relationship in a mapping manner of an uplink reference signal for positioning;
obtaining the first association relationship in an event trigger manner;
aperiodically obtaining the first association relationship; and
periodically obtaining the first association relationship.

52. The timing error group indication method according to claim 51, wherein before the obtaining the first association relationship by using a sequence of an uplink reference signal for positioning or in a mapping manner of an uplink reference signal for positioning, the method further comprises:
sending, by the location server, first indication signaling to the terminal, wherein the first indication signaling is used to indicate the terminal to enable a function of indicating the first association relationship by using the sequence of the uplink reference signal for positioning and/or using the mapping manner of the uplink reference signal for positioning.

53. The timing error group indication method according to claim 51, wherein the obtaining the first association relationship in an event trigger manner comprises:
receiving TEG indication signaling sent by the terminal, wherein the TEG indication signaling is used to indicate the first association relationship or indicate that the first association relationship changes.

54. The timing error group indication method according to claim 53, wherein before the receiving TEG indication signaling sent by the terminal, the method further comprises:
receiving, by the location server, second indication signaling at least once, wherein the second indication signaling is used to indicate the first association relationship.

55. The timing error group indication method according to claim 51, wherein the aperiodically obtaining the first association relationship comprises:
receiving third indication signaling sent by the terminal, wherein the third indication signaling is used to indicate an association relationship between an uplink reference signal for positioning in an instance of an uplink reference signal for positioning within a first time window before a first moment t and a first TEG; and
the first time window comprises latest P instances of uplink reference signals for positioning before the first moment t, P is a positive integer, and P is obtained in at least one manner of protocol agreement, network indication, and terminal selection.

56. The timing error group indication method according to claim 51, wherein the periodically obtaining the first association relationship comprises at least one of following:
receiving fourth indication signaling sent by the terminal according to a period T and/or a period offset, wherein the fourth indication signaling is used to indicate an association relationship between uplink reference signals for positioning at adjacent period intervals and a TEG; and
obtaining the first association relationship from a terminal receive-transmit time difference (LTE Rx-Tx time difference) measurement report.

57. The timing error group indication method according to claim 49, wherein the first information comprises the second association relationship, and the obtaining, by the location server, first information indicated by a terminal comprises:
in a case that a downlink positioning measurement result received by the location server comprises a downlink reference signal time difference (DL-RSTD), a receive-transmit time difference (Rx-Tx time difference), or another type of downlink measurement result, for a target positioning measurement result, obtaining, by the location server, an association relationship that is between the target positioning measurement result and N second TEGs and that is indicated by the terminal, wherein
the target positioning measurement result is a positioning measurement result obtained by the terminal by measuring a target resource of a downlink reference signal for positioning, N is a positive integer greater than or equal to 1, and N is obtained in at least one manner of protocol agreement, network indication, and terminal selection.

58. The timing error group indication method according to claim 57, wherein the obtaining, by the location server, an association relationship between the target positioning measurement result and N second TEGs comprises at least one of following:
obtaining, by the location server, paths that are associated with the N second TEGs and that are indicated by the terminal;
obtaining, by the location server, receive beam indexes that are associated with the N second TEGs and that are indicated by the terminal;
obtaining, by the location server, an indication of the terminal indicating that the N second TEGs are obtained by sweeping a plurality of receive beams or by simultaneously measuring the resource of the target downlink reference signal for positioning;
obtaining, by the location server, time stamps that are of downlink positioning measurement results associated with the N second TEGs and that are indicated by the terminal;
obtaining, by the location server, a time difference that is between the N second TEGs and that is indicated by the terminal;
obtaining, by the location server, location information that is associated with the N second TEGs in the terminal and that is indicated by the terminal;
obtaining, by the location server, downlink positioning measurement results that are associated with the N second TEGs and that are reported by the terminal; and
obtaining, by the location server, an association relationship that is between the target positioning measurement result and the N second TEGs and that is indicated in downlink positioning measurement results corresponding to different time stamps.

59. The timing error group indication method according to claim 57 or 58, further comprising:
sending, by the location server, fifth indication signaling to the terminal, wherein the fifth indication signaling is used to indicate the terminal to measure the resource of the target downlink reference signal for positioning through Rx TEG sweeping.

60. The timing error group indication method according to claim 59, further comprising at least one of following:
not indicating, by the location server, spatial QCL information of the resource of the target downlink reference signal for positioning; and
indicating, by the location server, the resource of the target downlink reference signal for positioning to be repeated.

61. The timing error group indication method according to claim 60, wherein the instructing the terminal to measure the resource of the downlink reference signal for positioning through Rx TEG sweeping comprises at least one of following:
instructing the terminal to measure the resource of the target downlink reference signal for positioning once through Rx TEG sweeping across M periods, wherein M is a positive integer, and M is obtained in at least one manner of protocol agreement, network indication, and terminal selection;
instructing the terminal to perform sweeping in partial Rx TEGs or instructing the terminal to perform sweeping across partial Rx TEGs; and
instructing the terminal to report downlink positioning measurement results associated with different Rx TEGs.

62. The timing error group indication method according to claim 61, wherein the instructing the terminal to measure the resource of the target downlink reference signal for positioning once through Rx TEG sweeping across M periods further comprises at least one of following:
indicating a total quantity of Rx TEGs in Rx TEG sweeping; and
indicating a quantity of Rx TEGs in Rx TEG sweeping in each instance of a downlink reference signal for positioning.

63. The timing error group indication method according to claim 57, further comprising:
sending sixth indication signaling to the terminal in a case that the terminal indicates N second TEGs and/or measurement results of N second TEGs and/or a plurality of receive beam indexes that are associated with a resource of a first downlink reference signal for positioning, wherein
the sixth indication signaling is used to indicate the terminal to use the resource of the first downlink reference signal for positioning as a reference resource for a resource of a second downlink reference signal for positioning.

64. The timing error group indication method according to claim 49, wherein the first information comprises the second association relationship, and the obtaining, by the location server, first information indicated by a terminal comprises:
in a case that a downlink positioning measurement result received by the location server comprises a terminal receive-transmit time difference (UE Rx-Tx time difference), performing, by the base station, one of following:
obtaining an association relationship among the downlink positioning measurement result, an Rx TEG and a Tx TEG;
obtaining an association relationship between the downlink positioning measurement result and an RxTx TEG; and
obtaining an association relationship between the downlink positioning measurement result and an Rx TEG.

65. The timing error group indication method according to claim 49, further comprising:
receiving, by the location server, information indicated by the terminal that a timing error of a downlink positioning measurement result is compensated or not compensated.

66. The timing error group indication method according to claim 49, further comprising:
sending seventh indication signaling to the terminal, wherein the seventh indication signaling is used to indicate a quantity of TEGs that can be associated when the terminal measures a downlink reference signal for positioning or sends an uplink reference signal for positioning.

67. The timing error group indication method according to claim 49, further comprising:
sending eighth indication signaling to the terminal, wherein the eighth indication signaling is used to indicate the terminal to calculate and/or report a time difference between second TEGs and/or compensate for an error of a second TEG in a downlink positioning measurement result.

68. The timing error group indication method according to claim 49, further comprising:
receiving terminal capability information, wherein
the terminal capability information comprises one of following:
calibration capability information;
Rx TEG capability information;
Tx TEG capability information; and
RxTx TEG capability information.

69. The timing error group indication method according to claim 49, further comprising:
obtaining third information indicated by the base station, wherein the third information is used to assist the location server in performing positioning calculation; and
the third information comprises at least one of following:
a third association relationship, wherein the third association relationship is used to indicate an association relationship between a downlink reference signal for positioning and a third timing error group (TEG);
a fourth association relationship, wherein the fourth association relationship is used to indicate an association relationship between an uplink positioning measurement result and a fourth TEG; and
an uplink positioning measurement result.

70. The timing error group indication method according to claim 69, further comprising:
indicating the first association relationship to the base station.

71. The timing error group indication method according to claim 69, further comprising:
obtaining fourth information indicated by the base station, wherein
the fourth information comprises at least one of following:
a time difference between first TEGs;
confidence or quality of a time difference between first TEGs;
a method for obtaining a first TEG; and
a TEG identifier associated with a first TEG.

72. The timing error group indication method according to claim 69, further comprising:
sending ninth indication signaling to the base station, wherein the ninth indication signaling is used to instruct the base station to calculate and/or report a time difference between first TEGs and/or compensate for an error of a first TEG in an uplink positioning measurement result.

73. The timing error group indication method according to claim 69, wherein the obtaining third information indicated by a base station comprises:
receiving an uplink positioning measurement result reported by the base station, wherein the uplink positioning measurement result comprises the first association relationship.

74. The timing error group indication method according to claim 69, wherein the obtaining third information indicated by the base station further comprises:
obtaining identifier information of an uplink reference signal for positioning associated with the uplink positioning measurement result, wherein
the identifier information of the uplink reference signal for positioning comprises at least one of following:
resource set identifier ID of an uplink reference signal for positioning;
resource ID of an uplink reference signal for positioning;
a serving cell ID or a carrier ID;
a bandwidth part (BWP) ID;
a bandwidth indicator;
a time stamp corresponding to an instance of an uplink reference signal for positioning;
an instance identifier of an uplink reference signal for positioning; and
frequency domain location information of a carrier and/or a BWP on which an uplink reference signal for positioning is located.

75. The timing error group indication method according to claim 49, further comprising at least one of following:
obtaining terminal capability information; and
sending the terminal capability information to the base station, wherein
the terminal capability information comprises one of following:
calibration capability information;
Rx TEG capability information;
Tx TEG capability information; and
RxTx TEG capability information.

76. A timing error group indication apparatus, comprising:
a first indication unit, configured to indicate first information to a network side device, wherein the first information is used to assist the network side device in performing positioning calculation; and
the first information comprises at least one of following:
a first association relationship, wherein the first association relationship is used to indicate an association relationship between an uplink reference signal for positioning and a first timing error group (TEG); and
a second association relationship, wherein the second association relationship is used to indicate an association relationship between a downlink positioning measurement result and a second TEG;
and/or
a first receiving unit, configured to receive second information sent by the network side device, wherein the second information is used to assist a terminal and/or the network side device in performing positioning calculation; and
the second information is used to indicate that there is an association relationship between a resource set of a downlink reference signal for positioning and an antenna port of a transmission and receiving point (TRP) and/or between a resource of a downlink reference signal for positioning and the antenna port of the TRP.

77. A timing error group indication apparatus, comprising:
a third indication unit, configured to indicate third information to a location server, wherein the third information is used to assist the location server in performing positioning calculation; and
the third information comprises at least one of following:
a third association relationship, wherein the third association relationship is used to indicate an association relationship between a downlink reference signal for positioning and a third timing error group (TEG);
a fourth association relationship, wherein the fourth association relationship is used to indicate an association relationship between an uplink positioning measurement result and a fourth TEG; and
an uplink positioning measurement result;
and/or
a fourth indication unit, configured to indicate second information to a terminal, wherein the second information is used to indicate that there is an association relationship between a resource set of a downlink reference signal for positioning and an antenna port of a transmission and receiving point (TRP) and/or between a resource of a downlink reference signal for positioning and the antenna port of the TRP.

78. A timing error group indication apparatus, comprising:
a second obtaining unit, configured to obtain first information indicated by a terminal, wherein the first information is used to assist a location server or a base station in performing positioning calculation; and
the first information comprises at least one of following:
a first association relationship, wherein the first association relationship is used to indicate an association relationship between an uplink reference signal for positioning and a first timing error group (TEG); and
a second association relationship, wherein the second association relationship is used to indicate an association relationship between a downlink positioning measurement result and a second TEG;
and/or
a sixth indication unit, configured to indicate second information to the terminal, wherein the second information is used to indicate that there is an association relationship between a resource set of a downlink reference signal for positioning and an antenna port of a transmission and receiving point (TRP) and/or between a resource of a downlink reference signal for positioning and the antenna port of the TRP.

79. A terminal, comprising a processor, a memory, and a program or an instruction stored in the memory and executable on the processor, wherein the program or the instruction is executed by the processor to implement steps of the timing error group indication method according to any one of claims 1 to 41.

80. A network side device, comprising a processor, a memory, and a program or an instruction stored in the memory and executable on the processor, wherein the program or the instruction is executed by the processor to implement steps of the timing error group indication method according to any one of claims 42 to 48 or steps of the timing error group indication method according to any one of claims 49 to 75.

81. A readable storage medium, wherein a program or an instruction is stored in the readable storage medium, and the program or the instruction is executed by a processor to implement steps of the timing error group indication method according to any one of claims 1 to 41, steps of the timing error group indication method according to any one of claims 42 to 48, or steps of the timing error group indication method according to any one of claims 49 to 75.

82. A chip, wherein the chip comprises a processor and a communication interface, the communication interface is coupled to the processor, and the processor is configured to run a program or an instruction, wherein the program or the instruction is executed by a processor to implement steps of the timing error group indication method according to any one of claims 1 to 41, or steps of the timing error group indication method according to any one of claims 42 to 48, or steps of the timing error group indication method according to any one of claims 49 to 75.

83. A computer program/program product, wherein the computer program/program product is stored in a non-volatile storage medium, and the program/program product is executed by at least one processor to implement steps of the timing error group indication method according to any one of claims 1 to 41, or steps of the timing error group indication method according to any one of claims 42 to 48, or steps of the timing error group indication method according to any one of claims 49 to 75.
